# EUROPEAN PATENT APPLICATION

(11) **EP 4 832 493 A1**
(43) Date of publication of application: **28.10.2026**
(21) Application number: 24919006.7
(22) Date of filing: 27.12.2024
(51) Int. Cl.: H04N 19/593, H04N 19/105, H04N 19/182, H04N 19/16, G06N 3/08

(54) **IMAGE DECODING DEVICE AND METHOD, AND IMAGE ENCODING DEVICE AND METHOD**

(30) Priority: 17.01.2024 KR 20240007644; 10.05.2024 KR 20240062191
(71) Applicant: Samsung Electronics Co., Ltd., Suwon-si, Gyeonggi-do 16677 (KR)
(72) Inventor: DINH, Quockhanh, Suwon-si, Gyeonggi-do 16677 (KR); CHOI, Kwangpyo, Suwon-si, Gyeonggi-do 16677 (KR)
(74) Representative: Appleyard Lees IP LLP
(86) International application number: PCT/KR2024/021329
(87) International publication number: WO 2025/154982

(57) **Abstract**

Proposed are an image decoding method and device, the method comprising: obtaining feature data for a current frame from a bitstream; decoding a first sub-frame among a plurality of sub-frames obtained by rearranging the current frame according to a predetermined decoding order on the basis of the feature data for the current frame; obtaining at least one intra-flow for the decoded first sub-frame in order to decode a second sub-frame among the plurality of sub-frames; decoding the second sub-frame by using the at least one intra-flow and the decoded first sub-frame; and reconstructing the current frame by using the decoded first sub-frame and the decoded second sub-frame.

## Description

### Technical Field

The present disclosure relates to an image decoding method and device and an image encoding method and device, and more particularly, to a method and device for performing intra prediction more efficiently.

### Background Art

In codecs such as H.264 advanced video coding (AVC) and high efficiency video coding (HEVC), an image may be split into blocks and each of the blocks may be prediction-encoded and prediction-decoded through inter prediction or intra prediction.

Intra prediction is a method of compressing an image by removing spatial redundancy in the image, and inter prediction is a method of compressing an image by removing temporal redundancy between images.

Intra prediction is performed by performing prediction on all pixels within a specific block in one intra prediction direction based on one intra prediction mode. In addition, interpolation of a reference pixel is performed by using fixed filter coefficients of a pre-determined filter.

Recently, technologies for encoding/decoding an image by using artificial intelligence (AI) have been proposed, and a method of effectively encoding/decoding an image by performing intra prediction by using AI, for example, a neural network, is required.

### Disclosure of Invention

### Solution to Problem

An image decoding method according to an embodiment of the present disclosure may include: obtaining feature data for a current frame from a bitstream; decoding a first sub-frame among a plurality of sub-frames rearranged from the current frame according to a pre-determined decoding order, based on the feature data for the current frame; obtaining at least one intra flow for the decoded first sub-frame in order to decode a second sub-frame among the plurality of sub-frames; decoding the second sub-frame by using the at least one intra flow and the decoded first sub-frame; and reconstructing the current frame by using the decoded first sub-frame and the decoded second sub-frame.

An image decoding device according to an embodiment of the present disclosure may include a memory storing one or more instructions; and at least one processor operating according to the one or more instructions. The at least one processor may obtain feature data for a current frame from a bitstream. The at least one processor may decode a first sub-frame among a plurality of sub-frames rearranged from the current frame according to a pre-determined decoding order, based on the feature data for the current frame. The at least one processor may obtain at least one intra flow for the decoded first sub-frame in order to decode a second sub-frame among the plurality of sub-frames. The at least one processor may decode the second sub-frame by using the at least one intra flow and the decoded first sub-frame. The at least one processor may reconstruct the current frame by using the decoded first sub-frame and the decoded second sub-frame.

An image encoding method according to an embodiment of the present disclosure may include: generating feature data for a current frame; encoding a first sub-frame among a plurality of sub-frames rearranged from the current frame according to a pre-determined encoding order, based on the feature data for the current frame; obtaining at least one intra flow for the encoded first sub-frame in order to encode a second sub-frame among the plurality of sub-frames; encoding the second sub-frame by using the at least one intra flow and the encoded first sub-frame; encoding the current frame by using the encoded first sub-frame and the encoded second sub-frame; and transmitting a bitstream including the feature data for the current frame.

An image encoding device according to an embodiment of the present disclosure may include: a memory storing one or more instructions; and at least one processor operating according to the one or more instructions. The at least one processor may generate feature data for a current frame. The at least one processor may encode a first sub-frame among a plurality of sub-frames rearranged from the current frame according to a pre-determined encoding order, based on the feature data for the current frame. The at least one processor may obtain at least one intra flow for the encoded first sub-frame in order to encode a second sub-frame among the plurality of sub-frames. The at least one processor may encode the second sub-frame by using the at least one intra flow and the encoded first sub-frame. The at least one processor may encode the current frame by using the encoded first sub-frame and the encoded second sub-frame. The at least one processor may transmit a bitstream including the feature data for the current frame.

### Brief Description of Drawings

FIG. 1 is a diagram illustrating a process of encoding and decoding an image.
FIG. 2 is a diagram illustrating blocks split from an image according to a tree structure.
FIG. 3 is a diagram illustrating an intra flow according to an embodiment of the present disclosure.
FIG. 4 is a diagram for describing a method of decomposing one frame into a plurality of sub-frames to reconstruct a frame by using an intra flow according to an embodiment of the present disclosure.
FIG. 5 is a diagram for describing an intra flow between a plurality of sub-frames according to an embodiment of the present disclosure.
FIG. 6 is a diagram for describing a method of progressively decoding a plurality of sub-frames by using a neural network according to an embodiment of the present disclosure.
FIG. 7 is a diagram for describing a method of progressively decoding a plurality of sub-frames by using a neural network according to an embodiment of the present disclosure.
FIG. 8 is a diagram for describing a method of progressively decoding a plurality of sub-frames by using a neural network and an intra flow according to an embodiment of the present disclosure.
FIG. 9 is a diagram for describing a method of progressively decoding a plurality of sub-frames by using a neural network and an intra flow according to an embodiment of the present disclosure.
FIG. 10 is a diagram for describing a method of progressively decoding a plurality of sub-frames by using a neural network and an intra flow according to an embodiment of the present disclosure.
FIG. 11 is a diagram for describing a method of progressively decoding a plurality of sub-frames by using a neural network and an intra flow according to an embodiment of the present disclosure.
FIG. 12 is a diagram for describing a method of progressively decoding a plurality of sub-frames by using a neural network and an intra flow according to an embodiment of the present disclosure.
FIG. 13 is a diagram for describing a method of progressively decoding a plurality of sub-frames by using a neural network and an intra flow according to an embodiment of the present disclosure.
FIG. 14 is a diagram for describing a method of progressively decoding a plurality of sub-frames by using a neural network and an intra flow according to an embodiment of the present disclosure.
FIG. 15 is a diagram for describing a method of progressively decoding a plurality of sub-frames by using a neural network and an intra flow according to an embodiment of the present disclosure.
FIG. 16 is a diagram for describing a method of progressively decoding a plurality of sub-frames by using a neural network and an intra flow according to an embodiment of the present disclosure.
FIG. 17 is a diagram for describing a method of training a neural network used in an image encoding method and an image decoding method according to an embodiment of the present disclosure.
FIG. 18 is a flowchart illustrating an image decoding method according to an embodiment of the present disclosure.
FIG. 19 is a diagram illustrating a configuration of an image decoding device according to an embodiment of the present disclosure.
FIG. 20 is a flowchart illustrating an image encoding method according to an embodiment of the present disclosure.
FIG. 21 is a diagram illustrating a configuration of an image encoding device according to an embodiment of the present disclosure.

### Mode for the Invention

Throughout the present disclosure, the expression "at least one of a, b, or c" indicates only a, only b, only c, both a and b, both a and c, both b and c, all of a, b, and c, or variations thereof.

As the present disclosure allows for various changes and numerous examples, particular embodiments will be illustrated in the drawings and described in detail in the written description. However, this is not intended to limit the embodiments of the present disclosure, and it should be understood that the present disclosure includes all modifications, equivalents, and substitutes included in the spirit and technical scope of various embodiments.

In describing the embodiments, when it is determined that a detailed description of a related known technology may unnecessarily obscure the gist of the present disclosure, the detailed description thereof will be omitted. Also, numbers (e.g., first and second) used in the description of the specification are merely identifier codes for distinguishing one component from another.

Also, in the present disclosure, it will be understood that when components are "connected" or "coupled" to each other, the components may be directly connected or coupled to each other, but may alternatively be connected or coupled to each other with an intervening component therebetween, unless specified otherwise.

Also, in the present disclosure, regarding a component represented as a '... unit' or a 'module', two or more components may be combined into one element or one component may be split into two or more components according to subdivided functions. In addition, each component described hereinafter may additionally perform some or all of functions performed by another component, in addition to main functions of itself, and some of the main functions of each component may be performed entirely by another component.

According to an embodiment of the present disclosure, a "... unit" may include a processor and a memory. The term "processor" should be interpreted broadly to encompass a general-purpose processor, a central processing unit (CPU), a microprocessor, a digital signal processor (DSP), a controller, a microcontroller, a state machine, and the like. Under some circumstances, a "processor" may refer to an application-specific integrated circuit (ASIC), a programmable logic device (PLD), a field-programmable gate array (FPGA), and the like. The term "processor" may refer to a combination of processing devices, e.g., a combination of a digital signal processor (DSP) and a microprocessor, a combination of a plurality of microprocessors, a combination of one or more microprocessors combined with a DSP core, or a combination of any other such components.

The processor may include various processing circuits and/or a plurality of processors. For example, the term "processor" used in the specification including the claims may include various processing circuits including at least one processor. In the at least one processor, one or more processors may be configured to perform various functions described herein, individually and/or collectively, in a distributed fashion. As used herein, the "processor", "at least one processor", and "one or more processors" may be configured to perform various functions. However, these terms cover, without limitation, a situation where one processor performs some of functions and other processors perform others of the functions, and a situation where a single processor may perform all functions. Also, at least one processor may include a combination of processors for performing various functions of disclosed functions in a distributed manner. The at least one processor may execute program instructions to achieve or perform various functions.

The term "memory" should be interpreted broadly to encompass any electronic component capable of storing electronic information. The term "memory" may refer to various types of processor-readable media such as random-access memory (RAM), read-only memory (ROM), non-volatile random-access memory (NVRAM), programmable read-only memory (PROM), erasable programmable read-only memory (EPROM), electrically erasable PROM (EEPROM), flash memory, magnetic or optical data storage, registers, etc. A memory is said to be in electronic communication with a processor when the processor may read information from and/or write information to the memory. A memory integrated in a processor is in electronic communication with the processor.

Also, in the present disclosure, an 'image' or a 'picture' may refer to a still image (or frame), a moving image including a plurality of consecutive still images, or a video.

In the present disclosure, a 'neural network (DNN)' is a representative example of an artificial neural network model simulating brain nerves, and is not limited to an artificial neural network model using a specific algorithm. The neural network may also be referred to as a deep neural network.

In the present disclosure, a 'parameter' is a value used in an operation process of each of layers constituting a neural network, and for example, may be used when an input value is applied to a certain operation expression. The parameter is a value set as a result of training, and may be updated through separate training data when necessary.

In the present disclosure, "feature data" or "feature map" may refer to data obtained when a neural network or a neural network-based encoder processes input data. The feature data may be one-dimensional or two-dimensional data including several samples. The feature data may also be referred to as a latent tensor or a latent representation. The feature data may represent a latent feature in data output by a neural network-based decoder.

In the present disclosure, a "sample" is data allocated to a sampling position in one-dimensional or two-dimensional data such as an image, a block, or feature data, and refers to data to be processed. For example, the sample may include a pixel in a two-dimensional image. The two-dimensional data may also be referred to as a "map".

In addition, in the present disclosure, a "current frame" refers to a frame that is a current processing target.

In addition, in the present disclosure, an "intra flow" refers to a reference pixel indicated by each pixel in a frame.

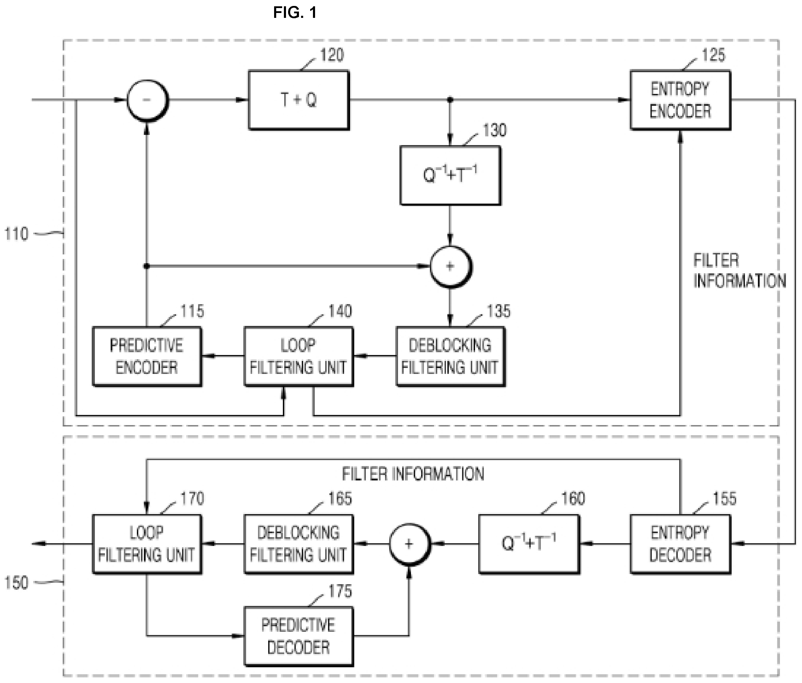

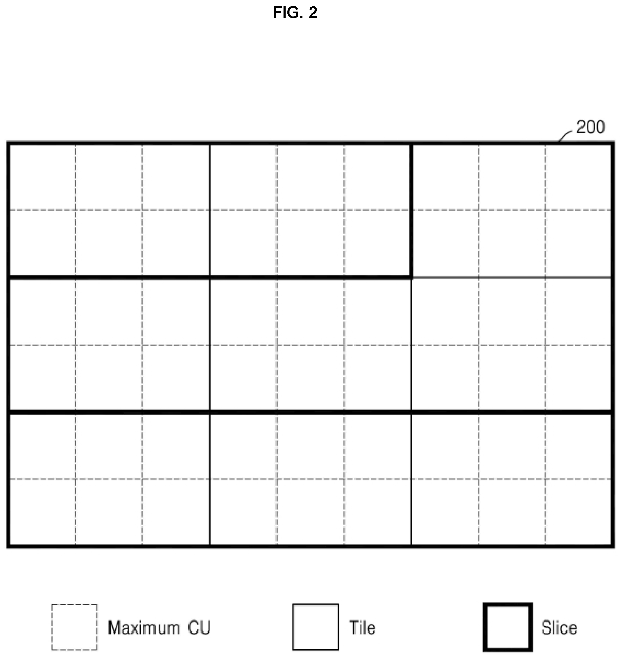

Before describing an image decoding method, an image decoding device, an image encoding method, and an image encoding device according to an embodiment, a process of encoding and decoding an image will be described with reference to FIGS. 1 and 2.

FIG. 1 is a diagram illustrating a process of encoding and decoding an image.

An encoding device 110 transmits a bitstream generated through encoding on an image to a decoding device 150, and the decoding device 150 reconstructs the image by receiving and decoding the bitstream.

Specifically, in the encoding device 110, a predictive encoder 115 outputs a prediction block through inter prediction and intra prediction, and a transform and quantization unit 120 outputs a quantized transform coefficient by transforming and quantizing residual samples of a residual block between the prediction block and a current block. An entropy encoder 125 encodes the quantized transform coefficient and outputs a bitstream.

The quantized transform coefficient is reconstructed into a residual block including residual samples in a spatial domain through an inverse-quantization and inverse-transform unit 130. A reconstructed block obtained by combining the prediction block with the residual block is output as a filtered block through a deblocking filtering unit 135 and a loop filtering unit 140. A reconstructed image including the filtered block may be used as a reference image for a next input image in the predictive encoder 115.

The bitstream received by the decoding device 150 is reconstructed into a residual block including residual samples in a spatial domain through an entropy decoder 155 and an inverse-quantization and inverse-transform unit 160. A reconstructed block is generated by combining the residual block and a prediction block output from a predictive decoder 175, and the reconstructed block is output as a filtered block through a deblocking filtering unit 165 and a loop filtering unit 170. A reconstructed image including the filtered block may be used as a reference image for a next image in the predictive decoder 175.

The loop filtering unit 140 of the encoding device 110 performs loop filtering by using filter information input according to a user input or system settings. The filter information used by the loop filtering unit 140 is transmitted to the decoding device 150 through the entropy encoder 125. The loop filtering unit 170 of the decoding device 150 may perform loop filtering based on filter information input from the entropy decoder 155.

In the process of encoding and decoding an image, the image is split hierarchically, and encoding and decoding are performed on blocks split from the image. A block split from an image will be described with reference to FIG. 2.

FIG. 2 is a diagram illustrating blocks split from an image 200 according to a tree structure.

One image 200 may be split into one or more slices or one or more tiles. One slice may include a plurality of tiles.

One slice or one tile may be a sequence of one or more maximum coding units (CUs).

One maximum coding unit may be split into one or more coding units. The coding unit may be a reference block for determining a prediction mode. In other words, it may be determined whether an intra-prediction mode or an inter-prediction mode is applied to each coding unit. In the present disclosure, the maximum coding unit may be referred to as a maximum coding block, and a coding unit may be referred to as a coding block.

A size of the coding unit may be equal to or less than that of the maximum coding unit. Because the maximum coding unit is a coding unit having a maximum size, the maximum coding unit may be referred to as a coding unit.

One or more prediction units for intra prediction or inter prediction may be determined from the coding unit. A size of the prediction unit may be equal to or less than that of the coding unit.

Also, one or more transform units for transform and quantization may be determined from the coding unit. A size of the transform unit may be equal to or less than that of the coding unit. The transform unit is a reference block for transform and quantization, and residual samples of the coding unit may be transformed and quantized for each transform unit within the coding unit.

In the present disclosure, a current block may be a slice, a tile, a maximum coding unit, a coding unit, a prediction unit, or a transform unit split from the image 200. Also, a lower block of the current block is a block split from the current block, and for example, when the current block is a maximum coding unit, the lower block may be a coding unit, a prediction unit, or a transform unit. In addition, an upper block of the current block is a block including the current block as a part, and for example, when the current block is a maximum coding unit, the upper block may be a picture sequence, a picture, a slice, or a tile.

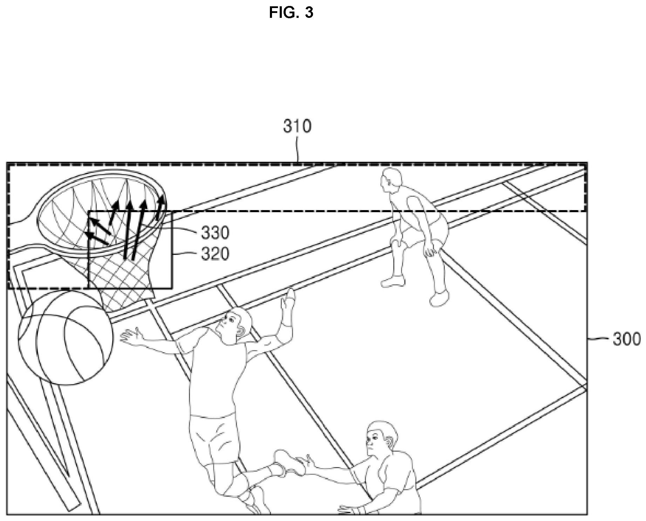

Hereinafter, a video decoding method, a video decoding device, a video encoding method, and a video encoding device according to an embodiment will be described with reference to FIGS. 3 to 23.

FIG. 3 is a diagram illustrating an intra flow according to an embodiment of the present disclosure.

Performing prediction in one intra-prediction direction according to one intra-prediction mode for all pixels in a block may not cover various video content. Each of all pixels in the block may have a different prediction direction indicating a best reference pixel for each pixel. When such non-local similarity is used, image decoding quality may be improved.

Referring to FIG. 3, pixels in a current block 320 of a current image 300 have an intra flow 330 representing different prediction directions indicating reference pixels in a neighboring reference region 310.

The intra flow 330 may be expressed as a vector indicating a difference of an x component and a y component between a current pixel and a reference pixel, a vector of a distance r component between the current pixel and the reference pixel and an angle θ component between the current pixel and the reference pixel based on an x-axis, or an angle between the current pixel and the reference pixel. When the intra flow is expressed only by the angle between the current pixel and the reference pixel, a reference pixel that is first located at a boundary line of the current block according to the angle based on the current pixel is determined as the reference pixel.

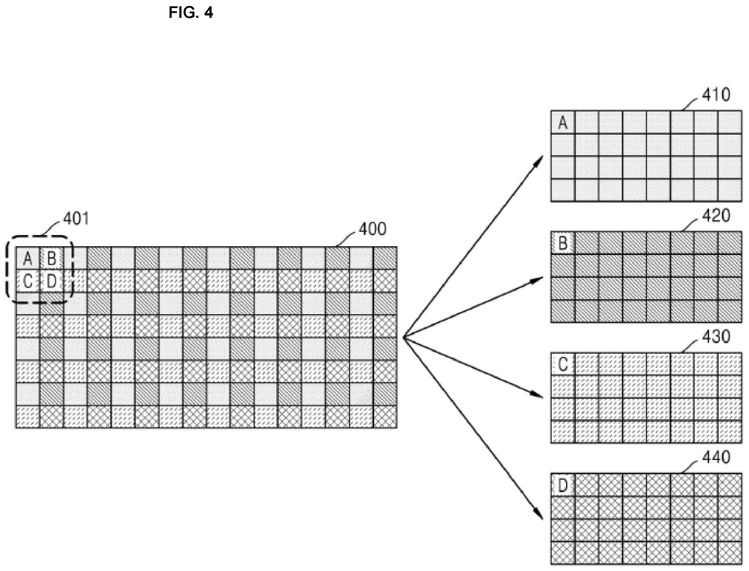

FIG. 4 is a diagram for describing a method of decomposing one frame into a plurality of sub-frames to reconstruct a frame by using an intra flow according to an embodiment of the present disclosure.

Each pixel in a frame has a spatial flow indicating neighboring pixels having similar pixel values. In order to effectively use such a spatial flow, one frame may be decomposed into a plurality of sub-frames.

A current frame may be split into MxN pixel group units or MxN decomposition blocks, and may be decomposed into MxN sub-frames through rearrangement such that pixels at the same position in the MxN pixel group units are included in the same sub-frame. Accordingly, the current frame of HxW may be decomposed into K (=MxN) sub-frames of hxw. This may be referred to as pixel un-shuffle or pixel decimation.

Referring to FIG. 4, a current frame 400 is split into 2x2 pixel group units 401. A first sub-frame 410 is obtained by collecting pixels of A located at an upper-left side in each pixel group into one sub-frame. A second sub-frame 420 is obtained by collecting pixels of B located at an upper-right side in each pixel group into one sub-frame. A third sub-frame 430 is obtained by collecting pixels of C located at a lower-left side in each pixel group into one sub-frame. A fourth sub-frame 440 is obtained by collecting pixels D located at a lower-right side in each pixel group into one sub-frame. Accordingly, a frame having a size of 8x16 is decomposed into four sub-frames having a size of 4x8.

This is one example and is not limited thereto. That is, the current frame may be decomposed into two, six, eight, or nine sub-frames. For example, when the current frame is split into 2x1 pixel group units, a first sub-frame may be obtained by collecting pixels located at an upper side in each pixel group into one sub-frame, and a first sub-frame may be obtained by collecting pixels located at a lower side in each pixel group into one sub-frame.

In addition, when the current frame is split into 1x2 pixel group units, a first sub-frame may be obtained by collecting pixels located at a left side in each pixel group into one sub-frame, and a first sub-frame may be obtained by collecting pixels located at a right side in each pixel group into one sub-frame.

In addition, when the current frame is split into 3x2 or 2x3 pixel group units, six sub-frames may be obtained by collecting pixels located at the same position in each pixel group into one sub-frame.

In addition, when the current frame is split into 4x2 or 2x4 pixel group units, eight sub-frames may be obtained by collecting pixels located at the same position in each pixel group into one sub-frame.

In addition, when the current frame is split into 3x3 pixel group units, nine sub-frames may be obtained by collecting pixels located at the same position in each pixel group into one sub-frame.

In addition, the current frame may be split into blocks having a size of PxQ, and the PxQ blocks may be sub-frames. In this method, the number of sub-frames is equal to the number of PxQ blocks. Here, P and Q are natural numbers.

In addition, the current frame may be a feature map domain as well as a pixel domain. That is, the current frame may be a feature map.

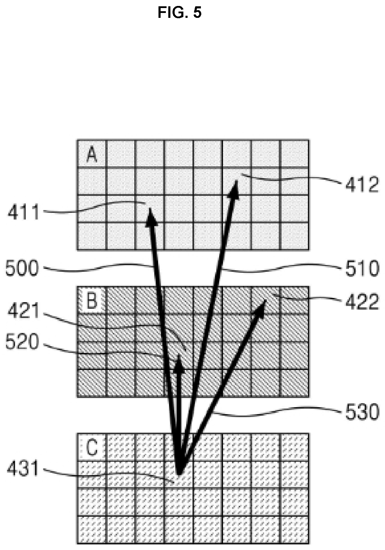

Hereinafter, an intra flow between a plurality of sub-frames will be described with reference to FIG. 5.

FIG. 5 is a diagram for describing an intra flow between a plurality of sub-frames according to an embodiment of the present disclosure.

One pixel in one sub-frame decomposed from the same frame may have a plurality of similar pixels in another sub-frame by a plurality of intra flows or one intra flow.

Referring to FIG. 5, a first pixel 431 in the third sub-frame 430 may have two intra flows (e.g., 500 and 510) for the first sub-frame 410. Among the two intra flows, a first intra flow 500 may indicate a first reference pixel 411 in the first sub-frame 410, and a second intra flow 510 may indicate a second reference pixel 412 in the first sub-frame 410. Also, the first pixel 431 in the third sub-frame 430 may have two intra flows (e.g., 520 and 530) for the second sub-frame 420. Among the two intra flows, a third intra flow 520 may indicate a first reference pixel 421 in the second sub-frame 420, and a fourth intra flow 530 may indicate a second reference pixel 422 in the second sub-frame 430.

When the number of intra flows indicating reference pixels in another sub-frame, which one pixel in a sub-frame has, is N, the number of intra gates indicating the reliability of each intra flow may also be N. Here, N is a natural number. In addition, N may vary according to each sub-frame.

Referring back to FIG. 5, when decoding is performed in the order of the first sub-frame 410, the second sub-frame 420, and the third sub-frame 430, the first sub-frame 410 and the second sub-frame 420 are used as reference sub-frames for the third sub-frame 430 at a time point when the third sub-frame 430 is decoded.

Specifically, referring to FIGS. 4 and 5, when decoding is performed in the order of the first sub-frame 410, the second sub-frame 420, the third sub-frame 430, and the fourth sub-frame 440, a reference sub-frame does not exist when the first sub-frame 410 is decoded. Thereafter, when the second sub-frame 420 is decoded, the decoded first sub-frame 410 is used as a reference sub-frame. When the third sub-frame 430 is decoded, two sub-frames, that is, the decoded first sub-frame 410 and the decoded second sub-frame 420, are used as reference sub-frames. Also, when the fourth sub-frame 440 is decoded, three sub-frames, that is, the decoded first sub-frame 410, the decoded second sub-frame 420, and the decoded third sub-frame 430, are used as reference sub-frames.

When a frame is split into K sub-frames, first to (k-1)^{th} sub-frames are used as reference sub-frames for a k^{th} sub-frame. When the number of sub-frames that may be used as reference sub-frames is J, J is equal to or less than K.

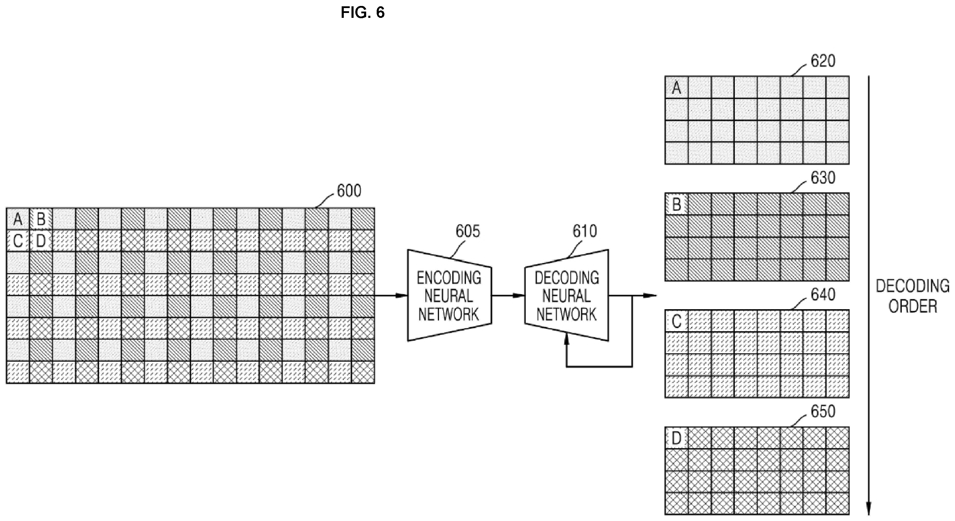

FIG. 6 is a diagram for describing a method of progressively decoding a plurality of sub-frames by using a neural network according to an embodiment of the present disclosure.

Referring to FIG. 6, a current frame 600 is input to an encoding neural network 605 and is output as feature data for the current frame 600. As the feature data for the current frame 600 is input to a decoding neural network 610, a first sub-frame 620 is first decoded according to a pre-determined decoding order. The pre-determined decoding order may be determined according to a learning or training result of the decoding neural network 610 for previous frames.

The decoded first sub-frame 620 is additionally input to the decoding neural network 610. That is, a second sub-frame 630 is decoded through the decoding neural network 610 based on the feature data for the current frame 600 and the decoded first sub-frame 620.

The decoded second sub-frame 630 is additionally input to the decoding neural network 610. That is, a third sub-frame 640 is decoded through the decoding neural network 610 based on the feature data for the current frame 600 and the decoded second sub-frame 630.

The decoded third sub-frame 640 is additionally input to the decoding neural network 610. That is, a fourth sub-frame 650 is decoded through the decoding neural network 610 based on the feature data for the current frame 600 and the decoded third sub-frame 640.

The current frame is reconstructed based on the decoded first sub-frame 620, the decoded second sub-frame 630, the decoded third sub-frame 640, and the decoded fourth sub-frame 650.

The decoding order may be another arbitrary order, such as the order of the first sub-frame 620, the second sub-frame 630, the fourth sub-frame 650, and the third sub-frame 640, as well as the order of the first sub-frame 620, the second sub-frame 630, the third sub-frame 640, and the fourth sub-frame 650.

Here, although the decoding neural network 610 is described as one neural network, this is an example, and a set of different neural networks may be used for each sub-frame.

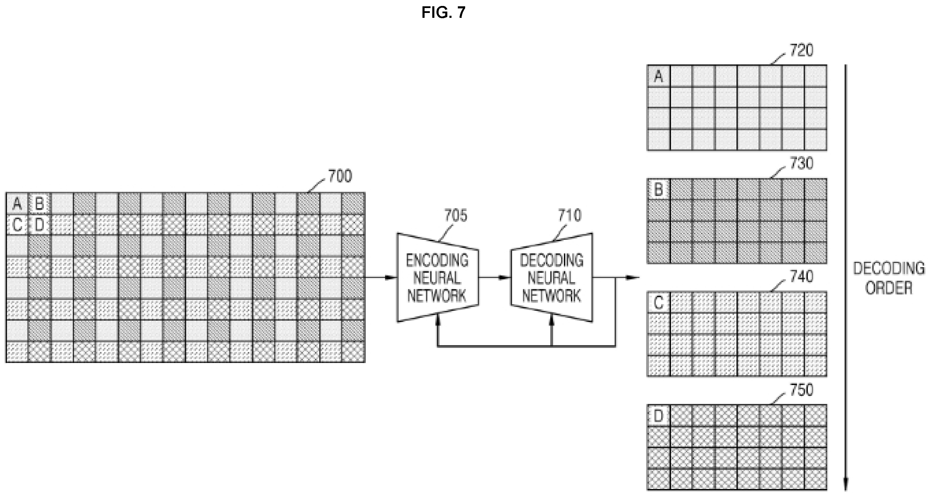

Although a decoded sub-frame is not used in an encoding neural network in FIG. 6, a decoded sub-frame may also be used in an encoding neural network in FIG. 7.

FIG. 7 is a diagram for describing a method of progressively decoding a plurality of sub-frames by using a neural network according to an embodiment of the present disclosure.

Referring to FIG. 7, a current frame 700 is input to an encoding neural network 705 and is output as first feature data for the current frame 700. As the first feature data for the current frame 700 is input to a decoding neural network 710, a first sub-frame 720 is first decoded according to a pre-determined decoding order. The pre-determined decoding order may be determined according to a learning or training result of the decoding neural network 710 for previous frames.

The decoded first sub-frame 720 is additionally input to the encoding neural network 705. That is, second feature data is output from the encoding neural network 705 based on the current frame 700 and the decoded first sub-frame 720. A second sub-frame 730 is decoded through the decoding neural network 710 based on the second feature data and the decoded first sub-frame 720.

The decoded second sub-frame 730 is additionally input to the encoding neural network 705. That is, third feature data is output from the encoding neural network 705 based on the current frame 700 and the decoded second sub-frame 730. A third sub-frame 740 is decoded through the decoding neural network 710 based on the third feature data and the decoded second sub-frame 730.

The decoded third sub-frame 740 is additionally input to the encoding neural network 705. That is, fourth feature data is output from the encoding neural network 705 based on the current frame 700 and the decoded third sub-frame 740. A fourth sub-frame 750 is decoded through the decoding neural network 710 based on the fourth feature data and the decoded third sub-frame 740.

The current frame is reconstructed based on the decoded first sub-frame 620, the decoded second sub-frame 630, the decoded third sub-frame 640, and the decoded fourth sub-frame 650.

The decoding order may be another arbitrary order, such as the order of the first sub-frame 720, the second sub-frame 730, the fourth sub-frame 750, and the third sub-frame 740, as well as the order of the first sub-frame 720, the second sub-frame 730, the third sub-frame 740, and the fourth sub-frame 750.

Here, although the decoding neural network 710 is described as one neural network, this is an example, and a set of different neural networks may be used for each sub-frame.

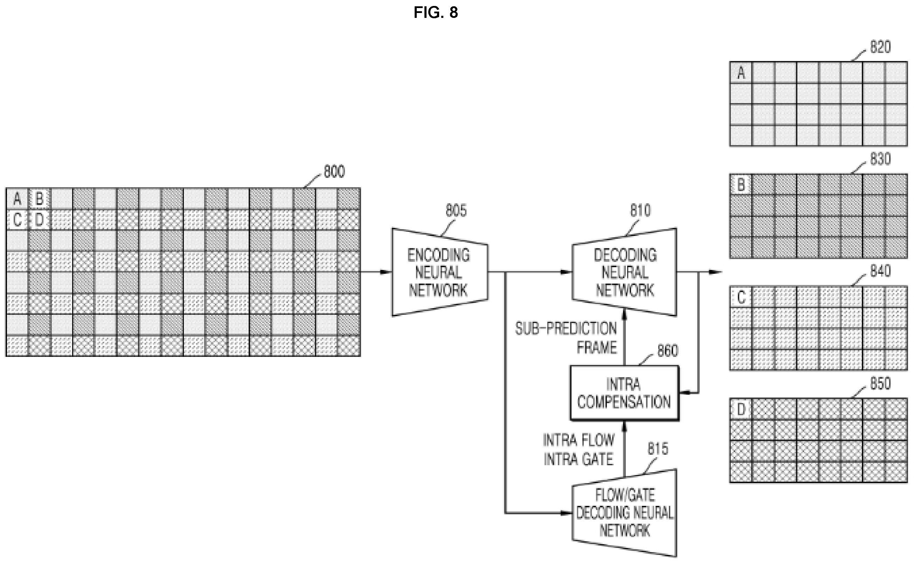

FIG. 8 is a diagram for describing a method of progressively decoding a plurality of sub-frames by using a neural network and an intra flow according to an embodiment of the present disclosure.

Referring to FIG. 8, a current frame 800 is input to an encoding neural network 805 and is output as feature data for the current frame 800. As the feature data for the current frame 800 is input to a decoding neural network 810, a first sub-frame 820 is first decoded according to a pre-determined decoding order. The pre-determined decoding order may be determined according to a learning or training result of the decoding neural network 810 for previous frames.

After the first sub-frame 820 is decoded, as the feature data for the current frame 800 is input to a flow/gate decoding neural network 815, an intra flow and an intra gate for the first sub-frame of a second sub-frame 830 are obtained. A second sub-prediction frame for the second sub-frame is obtained by performing intra compensation 860 by using the decoded first sub-frame 820 and the intra flow and the intra gate for the first sub-frame 820 of the second sub-frame 830. The second sub-frame 830 is decoded as the feature data for the current frame 800 and the second sub-prediction frame are input to the decoding neural network 810.

In the present disclosure, 'intra compensation' may use an 'intra flow', which is a flow indicating a pixel similar to each pixel or a sample similar to a sample position in a feature map, which the each pixel or the sample position in the feature map may have, an 'intra gate value', which is a gate value associated with the intra flow and used to determine how much the intra flow is reliable, and a 'previously decoded sub-frame' or a 'previously decoded sub-feature map', in order to generate prediction values of a current sub-frame or a current sub-feature map to be decoded.

In addition, in the present disclosure, a "sub-feature map" may refer to data obtained by processing data related to a "frame" through a neural network. In addition, the "sub-feature map" may be obtained by dividing samples of a "feature map" obtained through the neural network into a plurality of pixel groups and rearranging samples at the same position in the plurality of pixel groups to be included in the same sub-feature map.

After the second sub-frame 830 is decoded, as the feature data for the current frame 800 is input to the flow/gate decoding neural network 815, an intra flow and an intra gate for the first sub-frame 820 of a third sub-frame 840 and an intra flow and an intra gate for the second sub-frame 830 of the third sub-frame 840 are obtained. A third sub-prediction frame for the third sub-frame is obtained by performing the intra compensation 860 by using the decoded first sub-frame 820, the decoded second sub-frame 830, the intra flow and the intra gate for the first sub-frame 820 of the third sub-frame 840, and the intra flow and the intra gate for the second sub-frame 830 of the third sub-frame 840. The third sub-frame 840 is decoded as the feature data for the current frame 800 and the third sub-prediction frame are input to the decoding neural network 810.

After the third sub-frame 840 is decoded, as the feature data for the current frame 800 is input to the flow/gate decoding neural network 815, an intra flow and an intra gate for the first sub-frame 820 of a fourth sub-frame 850, an intra flow and an intra gate for the second sub-frame 830 of the fourth sub-frame 850, and an intra gate and an intra gate for the third sub-frame 840 of the fourth sub-frame 850 are obtained. A fourth sub-prediction frame for the fourth sub-frame is obtained by performing the intra compensation 860 by using the decoded first sub-frame 820, the decoded second sub-frame 830, the decoded third sub-frame 840, the intra flow and the intra gate for the first sub-frame 820 of the fourth sub-frame 850, the intra flow and the intra gate for the second sub-frame 830 of the fourth sub-frame 850, and the intra flow and the intra gate for the third sub-frame 840 of the fourth sub-frame 850. The fourth sub-frame 850 is decoded as the feature data for the current frame 800 and the fourth sub-prediction frame are input to the decoding neural network 810.

The current frame is reconstructed based on the decoded first sub-frame 820, the decoded second sub-frame 830, the decoded third sub-frame 840, and the decoded fourth sub-frame 850.

According to an embodiment of the present disclosure, an intra flow may be used without using an intra gate. This may correspond to a case where an intra gate value is 1. The intra flow is used in a pixel domain.

Hereinafter, an intra compensation method will be described.

When a frame is decomposed into K sub-frames, the number of sub-frames decoded before a k^{th} sub-frame is J, and the number of intra flows for each sub-frame is 1, a plurality of prediction values of the k^{th} sub-frame may be generated as shown in Equation 1 below. [Equation 1] ${SubPrediction}_{j - > k} = Warping \left({subFrame}_{j}, {intraFlow}_{j}\right)$
where j=1, . . . , J. A k^{th} sub-prediction frame (SubPrediction_{j->k}) for the k^{th} sub-frame may be obtained by warping based on a j^{th} sub-frame and an intra flow (intraFlowⱼ) of the k^{th} sub-frame for the j^{th} sub-frame decoded before the k^{th} sub-frame. Accordingly, J k^{th} sub-prediction frames (SubPrediction_{j->k}) may be obtained. J may be equal to or less than k-1. When all k-1 sub-frames before the k^{th} sub-frame are used, J may be equal to k-1. When all k-1 sub-frames may not be used due to complexity limitations, J may be less than k-1.

One sub-prediction frame among the plurality of sub-prediction frames may be used for decoding. In addition, when the plurality of sub-prediction frames are in a feature map domain, they may be used for concatenation decoding.

Also, when a frame is decomposed into K sub-frames, the number of sub-frames decoded before a k^{th} sub-frame is J, and the number of intra flows for each sub-frame is 1, a prediction value of the k^{th} sub-frame may be generated as one value as shown in Equation 2 below. [Equation 2] ${SubPrediction}_{k} = {\sum }_{j = 1 , … , J} Warping \left({subFrame}_{j}, {intraFlow}_{j}\right) / J$
where j=1, . . . , J. A k^{th} sub-prediction frame for the k^{th} sub-frame may be obtained by warping based on a j^{th} sub-frame and an intra flow (intraFlowⱼ) of the k^{th} sub-frame for the j^{th} sub-frame decoded before the k^{th} sub-frame. One k^{th} sub-prediction frame (SubPredictionₖ) for the k^{th} sub-frame may be obtained by dividing a result of equally adding the obtained J k^{th} sub-prediction frames with a weight of 1 by J.

Such a sub-prediction frame may be used for decoding. For example, it may be used for residual decoding.

When a frame is decomposed into K sub-frames, the number of sub-frames decoded before a k^{th} sub-frame is J, and the number of intra flows for each sub-frame is N, a plurality of prediction values of the k^{th} sub-frame may be generated as shown in Equation 3 below. [Equation 3] ${SubPrediction}_{j - > k} = {\sum }_{n = 1 , … , N} Warping \left({subFrame}_{j}, {intraFlow}_{n , j}\right) / N$
where j=1, ... , J. N k^{th} sub-prediction frames for the k^{th} sub-frame may be obtained by warping based on a j^{th} sub-frame and an n^{th} intra flow (intraFlow_{n,j}) among N intra flows of the k^{th} sub-frame for the j^{th} sub-frame decoded before the k^{th} sub-frame. J k^{th} sub-prediction frames (SubPrediction_{j->k}) may be obtained by dividing a result of adding all of the N k^{th} sub-prediction frames by N.

One sub-prediction frame among the plurality of sub-prediction frames may be used for decoding. In addition, when the plurality of sub-prediction frames are in a feature map domain, they may be used for concatenation decoding.

Also, when a frame is decomposed into K sub-frames, the number of sub-frames decoded before a k^{th} sub-frame is J, and the number of intra flows for each sub-frame is N, a prediction value of the k^{th} sub-frame may be generated as one value as shown in Equation 4 below. [Equation 4] ${SubPrediction}_{k} = {\sum }_{j = 1 , … , J} {\sum }_{n = 1 , … , N} Warping \left({subFrame}_{j}, {intraFlow}_{n , j}\right) / \left(N∗J\right)$
where j=1, . . . , J. N k^{th} sub-prediction frames for the k^{th} sub-frame may be obtained by warping based on a j^{th} sub-frame and an n^{th} intra flow (intraFlow_{n,j}) among N intra flows of the k^{th} sub-frame for the j^{th} sub-frame decoded before the k^{th} sub-frame. J k^{th} sub-prediction frames may be obtained by adding all of the N k^{th} sub-prediction frames. One k^{th} sub-prediction frame (SubPredictionₖ) for the k^{th} sub-frame may be obtained by dividing a result of equally adding the obtained J k^{th} sub-prediction frames with a weight of 1 by N*J.

Such a sub-prediction frame may be used for decoding. For example, it may be used for residual decoding.

When a frame is decomposed into K sub-frames, the number of sub-frames decoded before a k^{th} sub-frame is J, the number of intra flows for each sub-frame is 1, and the number of intra gates for each sub-frame is 1, a plurality of prediction values of the k^{th} sub-frame may be generated as in Equation 5 below. [Equation 5] ${SubPrediction}_{j - > k} = {intraGate}_{j} \times Warping \left({subFrame}_{j}, {intraFlow}_{j}\right)$
where j=1, . . . , J. A k^{th} sub-prediction frame (SubPrediction_{j->k}) for the k^{th} sub-frame may be obtained by warping based on a j^{th} sub-frame and an intra flow (intraFlowⱼ) of the k^{th} sub-frame for the j^{th} sub-frame decoded before the k^{th} sub-frame and multiplying a warping result by an intra gate (intraGateⱼ) of the k^{th} sub-frame for the j^{th} sub-frame. Accordingly, J k^{th} sub-prediction frames (SubPrediction_{j->k}) may be obtained.

One sub-prediction frame among the plurality of sub-prediction frames may be used for decoding. In addition, when the plurality of sub-prediction frames are in a feature map domain, they may be used for concatenation decoding.

Also, when a frame is decomposed into K sub-frames, the number of sub-frames decoded before a k^{th} sub-frame is J, the number of intra flows for each sub-frame is 1, and the number of intra gates for each sub-frame is 1, a prediction value of the k^{th} sub-frame may be generated as one value as shown in Equation 6 below. [Equation 6] ${SubPrediction}_{k} = {\sum }_{j = 1 , … , J} {intraGate}_{j} \times Warping \left({subFrame}_{j}, {intraFlow}_{j}\right) / J$
where j=1, . . . , J. A k^{th} sub-prediction frame for the k^{th} sub-frame may be obtained by warping based on a j^{th} sub-frame and an intra flow (intraFlowⱼ) of the k^{th} sub-frame for the j^{th} sub-frame decoded before the k^{th} sub-frame, and multiplying a warping result by an intra gate (intraGateⱼ) of the k^{th} sub-frame for the j^{th} sub-frame. One k^{th} sub-prediction frame (SubPredictionₖ) for the k^{th} sub-frame may be obtained by dividing a result of equally adding the obtained J k^{th} sub-prediction frames with a weight of 1 by J.

Such a sub-prediction frame may be used for decoding. For example, it may be used for residual decoding.

When a frame is decomposed into K sub-frames, the number of sub-frames decoded before a k^{th} sub-frame is J, the number of intra flows for each sub-frame is N, and the number of intra gates for each sub-frame is N, a plurality of prediction values of the k^{th} sub-frame may be generated as shown in Equation 7 below. [Equation 7] ${SubPrediction}_{j - > k} = {\sum }_{n = 1 , … , N} {intraGate}_{n , j} \times Warping \left({subFrame}_{j}, {intraFlow}_{n , j}\right) / N$
where j=1, . . . , J. N k^{th} sub-prediction frames for the k^{th} sub-frame may be obtained by warping based on a j^{th} sub-frame and an n^{th} intra flow (intraFlow_{n,j}) among N intra flows of the k^{th} sub-frame for the j^{th} sub-frame decoded before the k^{th} sub-frame and multiplying a warping result by an n^{th} intra gate (intraGate_{n,j}) of the k^{th} sub-frame for the j^{th} sub-frame. J k^{th} sub-prediction frames (SubPrediction_{j->k}) may be obtained by dividing a result of adding all of the N k^{th} sub-prediction frames by N.

One sub-prediction frame among the plurality of sub-prediction frames may be used for decoding. In addition, when the plurality of sub-prediction frames are in a feature map domain, they may be used for concatenation decoding.

Also, when a frame is decomposed into K sub-frames, the number of sub-frames decoded before a k^{th} sub-frame is J, the number of intra flows for each sub-frame is N, and the number of intra gates for each sub-frame is N, a prediction value of the k^{th} sub-frame may be generated as one value as shown in Equation 8 below. [Equation 8] ${SubPrediction}_{k} = {\sum }_{j = 1 , … , J} {\sum }_{n = 1 , … , N} {intraGate}_{n , j} \times Warping \left({subFrame}_{j}, {intraFlow}_{n , j}\right) / \left(N∗J\right)$
where j=1, . . . , J. N k^{th} sub-prediction frames for the k^{th} sub-frame may be obtained by warping based on a j^{th} sub-frame and an n^{th} intra flow (intraFlow_{n,j}) among N intra flows of the k^{th} sub-frame for the j^{th} sub-frame decoded before the k^{th} sub-frame and multiplying a warping result by an n^{th} intra gate (intraGate_{n,j}) of the k^{th} sub-frame for the j^{th} sub-frame. J k^{th} sub-prediction frames may be obtained by adding all of the N k^{th} sub-prediction frames. One k^{th} sub-prediction frame (SubPredictionₖ) for the k^{th} sub-frame may be obtained by dividing a result of adding the obtained J k^{th} sub-prediction frames by N*J.

Such a sub-prediction frame may be used for decoding. For example, it may be used for residual decoding.

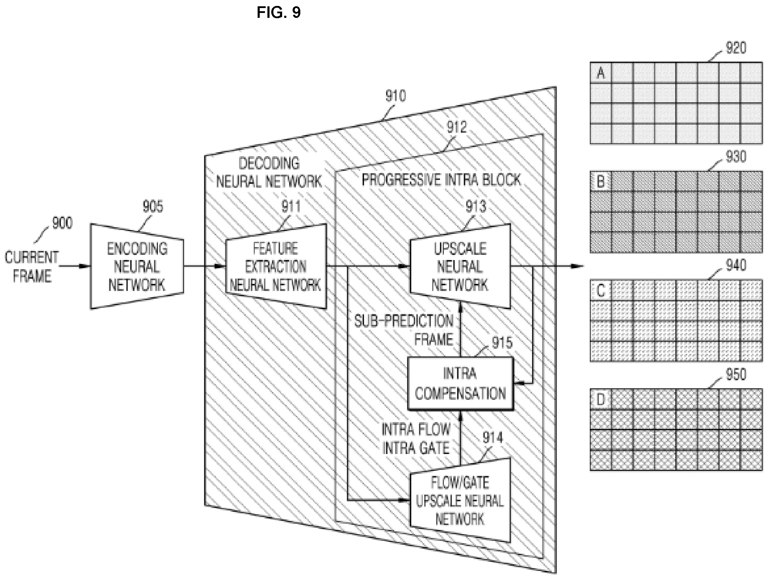

FIG. 9 is a diagram for describing a method of progressively decoding a plurality of sub-frames by using a neural network and an intra flow according to an embodiment of the present disclosure.

Referring to FIG. 9, a current frame 900 is input to an encoding neural network 905 and is output as feature data for the current frame 900. As the feature data for the current frame 900 is input to a feature extraction neural network 911 in a decoding neural network 910, feature extraction data for the current frame 900 is output. The feature extraction data may be data in which a feature of the feature data for the current frame 900 is further enhanced.

As the feature extraction data for the current frame 900 is input to a progressive intra block 912, a first sub-frame 920, a second sub-frame 930, a third sub-frame 940, and a fourth sub-frame 950 are decoded.

Specifically, as the feature extraction data for the current frame 900 is input to an upscale neural network 913 in the progressive intra block 912, the first sub-frame 920 is first decoded according to a pre-determined decoding order. The upscale neural network 913 is used to upscale the feature extraction data for the current frame 900 because the feature extraction data has a reduced size compared to an original size of the current frame 900. The predetermined decoding order may be determined according to a learning or training result of the upscale neural network 913 for previous frames.

After the first sub-frame 920 is decoded, as the feature extraction data for the current frame 900 is input to a flow/gate upscale neural network 914 in the progressive intra block 912, an intra flow and an intra gate for the first sub-frame 920 of the second sub-frame 930 are obtained. A second sub-prediction frame for the second sub-frame 930 is obtained by performing intra compensation 915 by using the decoded first sub-frame 920 and the intra flow and the intra gate for the first sub-frame 920 of the second sub-frame 930. As the feature extraction data for the current frame 900 and the second sub-prediction frame are input to the upscale neural network 913, the second sub-frame 930 is decoded.

After the second sub-frame 930 is decoded, as the feature extraction data for the current frame 900 is input to the flow/gate upscale neural network 914 in the progressive intra block 912, an intra flow and an intra gate for the first sub-frame 920 of the third sub-frame 940 and an intra flow and an intra gate for the second sub-frame 930 of the third sub-frame 940 are obtained. A third sub-prediction frame for the third sub-frame 940 is obtained by performing the intra compensation 915 by using the decoded first sub-frame 920, the decoded second sub-frame 930, the intra flow and the intra gate for the first sub-frame 920 of the third sub-frame 940, and the intra flow and the intra gate for the second sub-frame 930 of the third sub-frame 940. As the feature extraction data for the current frame 900 and the third sub-prediction frame are input to the upscale neural network 913, the third sub-frame 940 is decoded.

After the third sub-frame 940 is decoded, as the feature data for the current frame 900 is input to the flow/gate upscale neural network 914 in the progressive intra block 912, an intra flow and an intra gate for the first sub-frame 920 of the fourth sub-frame 950, an intra flow and an intra gate for the second sub-frame 930 of the fourth sub-frame 950, and an intra flow and an intra gate for the third sub-frame 940 of the fourth sub-frame 950 are obtained. A fourth sub-prediction frame for the fourth sub-frame 950 is obtained by performing the intra compensation 915 is by using the decoded first sub-frame 920, the decoded second sub-frame 930, the decoded third sub-frame 940, the intra flow and the intra gate for the first sub-frame 920 of the fourth sub-frame 950, the intra flow and the intra gate for the second sub-frame 930 of the fourth sub-frame 950, and the intra flow and the intra gate for the third sub-frame 940 of the fourth sub-frame 950. As the feature extraction data for the current frame 900 and the fourth sub-prediction frame are input to the upscale neural network 913, the fourth sub-frame 950 is decoded.

The current frame is reconstructed based on the decoded first sub-frame 920, the decoded second sub-frame 930, the decoded third sub-frame 940, and the decoded fourth sub-frame 950.

According to an embodiment of the present disclosure, only an intra flow may be used without using an intra gate. This may correspond to a case where an intra gate value is 1. Here, because the intra compensation is performed in a pixel domain, the intra flow is in the pixel domain.

Although there is one feature extraction neural network in FIG. 9, there may be a plurality of feature extraction neural networks. Accordingly, the feature extraction data may be output through the plurality of feature extraction neural networks.

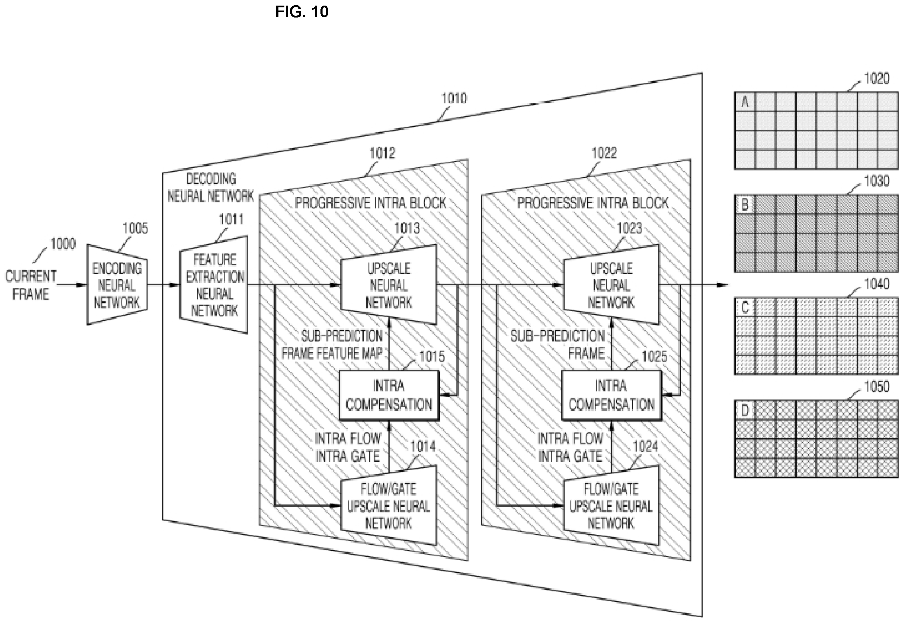

Although there is one progressive intra block in FIG. 9, there may be a plurality of progressive intra blocks. Hereinafter, a configuration in which there are two progressive intra blocks will be described with reference to FIG. 10.

FIG. 10 is a diagram for describing a method of progressively decoding a plurality of sub-frames by using a neural network and an intra flow according to an embodiment of the present disclosure.

Referring to FIG. 10, a current frame 1000 is input to an encoding neural network 1005 and is output as feature data for the current frame 1000. As the feature data for the current frame 1000 is input to a feature extraction neural network 1011 in a decoding neural network 1010, feature extraction data for the current frame 1000 is output. The feature extraction data may be data in which a feature of the feature data for the current frame 1000 is further enhanced.

As the feature extraction data for the current frame 1000 is input to a first progressive intra block 1012 and a second progressive intra block 1022, a first sub-frame 1020, a second sub-frame 1030, a third sub-frame 1040, and a fourth sub-frame 1050 are decoded.

Specifically, as the feature extraction data for the current frame 900 is input to an upscale neural network 1013 in the first progressive intra block 1012, a first sub-frame feature map is first obtained according to a pre-determined decoding order. The upscale neural network 1013 is used to upscale the feature extraction data for the current frame 1000 because the feature extraction data has a reduced size compared to an original size of the current frame 1000. The pre-determined decoding order may be determined according to a learning or training result of the upscale neural network 1013 for previous frames.

After the first sub-frame feature map is obtained, as the feature extraction data for the current frame 1000 is input to a flow/gate upscale neural network 1014 in the first progressive intra block 1012, an intra flow and an intra gate for the first sub-frame feature map of a second sub-frame feature map are obtained. A second sub-prediction frame feature map for the second sub-frame feature map is obtained by performing intra compensation 1015 by using the obtained first sub-frame feature map and the intra flow and the intra gate for the first sub-frame feature map of the second sub-frame feature map. As the feature extraction data for the current frame 1000 and the second sub-prediction frame feature map are input to the upscale neural network 1013, the second sub-frame feature map is obtained.

After the second sub-frame feature map is obtained, as the feature extraction data for the current frame 1000 is input to the flow/gate upscale neural network 1014 in the first progressive intra block 1012, an intra flow and an intra gate for the first sub-frame feature map of a third sub-frame feature map, and an intra flow and an intra gate for the second sub-frame feature map of the third sub-frame feature map are obtained. A third sub-prediction frame feature map for the third sub-frame feature map is obtained by performing the intra compensation 1015 by using the obtained first sub-frame feature map, the obtained second sub-frame feature map, the intra flow and the intra gate for the first sub-frame feature map of the third sub-frame feature map, and the intra flow and the intra gate for the second sub-frame feature map of the third sub-frame feature map. As the feature extraction data for the current frame 1000 and the third sub-prediction frame feature map are input to the upscale neural network 1013, the third sub-frame feature map is obtained.

After the third sub-frame feature map is obtained, as the feature data for the current frame 1000 is input to the flow/gate upscale neural network 1014 in the first progressive intra block 1012, an intra flow and an intra gate for the first sub-frame feature map of a fourth sub-frame feature map, an intra flow and an intra gate for the second sub-frame feature map of the fourth sub-frame feature map, and an intra flow and an intra gate for the third sub-frame feature map of the fourth sub-frame feature map are obtained. A fourth sub-prediction frame feature map for the fourth sub-frame feature map is obtained by performing the intra compensation 1015 by using the obtained first sub-frame feature map, the obtained second sub-frame feature map, the obtained third sub-frame feature map, the intra flow and the intra gate for the first sub-frame feature map of the fourth sub-frame feature map, the intra flow and the intra gate for the second sub-frame feature map of the fourth sub-frame feature map, and the intra flow and the intra gate for the third sub-frame feature map of the fourth sub-frame feature map. As the feature extraction data for the current frame 1000 and the fourth sub-prediction frame feature map are input to the upscale neural network 1013, the fourth sub-frame feature map is obtained.

A feature map for the current frame 1000 may be obtained based on the obtained first sub-frame feature map, the obtained second sub-frame feature map, the obtained third sub-frame feature map, and the obtained fourth sub-frame feature map.

As the feature map for the current frame 1000 is input to an upscale neural network 1023 in the second progressive intra block 1022, the first sub-frame 1020 is first decoded according to a pre-determined decoding order. The feature map for the current frame 1000 is data representing a feature of the current frame based on a neural network, and may be greater than the feature extraction data of the current frame 1000 and less than the current frame 1000. The pre-determined decoding order may be determined according to a learning or training result of the upscale neural network 1023 for previous frames.

After the first sub-frame 1020 is decoded, as the feature map for the current frame 1000 is input to a flow/gate upscale neural network 1024 in the second progressive intra block 1022, an intra flow and an intra gate for the first sub-frame 1020 of the second sub-frame 1030 are obtained. A second sub-prediction frame for the second sub-frame 1030 is obtained by performing intra compensation 1025 by using the decoded first sub-frame 1020 and the intra gate and the intra flow for the first sub-frame 1020 of the second sub-frame 1030. As the feature map for the current frame 1000 and the second sub-prediction frame are input to the upscale neural network 1023, the second sub-frame 1030 is decoded.

After the second sub-frame 1030 is decoded, as the feature map for the current frame 1000 is input to the flow/gate upscale neural network 1024 in the second progressive intra block 1022, an intra flow and an intra gate for the first sub-frame 1020 of the third sub-frame 1040, and an intra flow and an intra gate for the second sub-frame 1030 of the third sub-frame 1040 are obtained. A third sub-prediction frame for the third sub-frame 1040 is obtained by performing the intra compensation 1025 by using the decoded first sub-frame 1020, the decoded second sub-frame 1030, the intra flow and the intra gate for the first sub-frame 1020 of the third sub-frame 1040, and the intra flow and the intra gate for the second sub-frame 1030 of the third sub-frame 1040. As the feature map for the current frame 1000 and the third sub-prediction frame are input to the upscale neural network 1023, the third sub-frame 1040 is decoded.

After the third sub-frame 1040 is decoded, as the feature map for the current frame 1000 is input to the flow/gate upscale neural network 1024 in the second progressive intra block 1022, an intra flow and an intra gate for the first sub-frame 1020 of the fourth sub-frame 1050, an intra flow and an intra gate for the second sub-frame 1030 of the fourth sub-frame 1050, and an intra flow and an intra gate for the third sub-frame 1040 of the fourth sub-frame 1050 are obtained. A fourth sub-prediction frame for the fourth sub-frame 1050 is obtained by performing the intra compensation 1025 by using the decoded first sub-frame 1020, the decoded second sub-frame 1030, the decoded third sub-frame 1040, the intra flow and the intra gate for the first sub-frame 1020 of the fourth sub-frame 1050, the intra flow and the intra gate for the second sub-frame 1030 of the fourth sub-frame 1050, and the intra flow and the intra gate for the third sub-frame 1040 of the fourth sub-frame 1050. As the feature map for the current frame 1000 and the fourth sub-prediction frame are input to the upscale neural network 1023, the fourth sub-frame 1050 is decoded.

The current frame is reconstructed based on the decoded first sub-frame 1020, the decoded second sub-frame 1030, the decoded third sub-frame 1040, and the decoded fourth sub-frame 1050.

According to an embodiment of the present disclosure, only an intra flow may be used without using an intra gate. This may correspond to a case where an intra gate value is 1. In the first progressive intra block 1012, because the intra compensation is performed in a feature map domain, the intra flow of the first progressive intra block 1012 is in the feature map domain, and in the second progressive intra block 1022, because the intra compensation is performed in a pixel domain, the intra flow of the second progressive intra block 1022 is in the pixel domain.

Although there is one feature extraction neural network in FIG. 10, there may be a plurality of feature extraction neural networks. Accordingly, the feature extraction data may be output through the plurality of feature extraction neural networks.

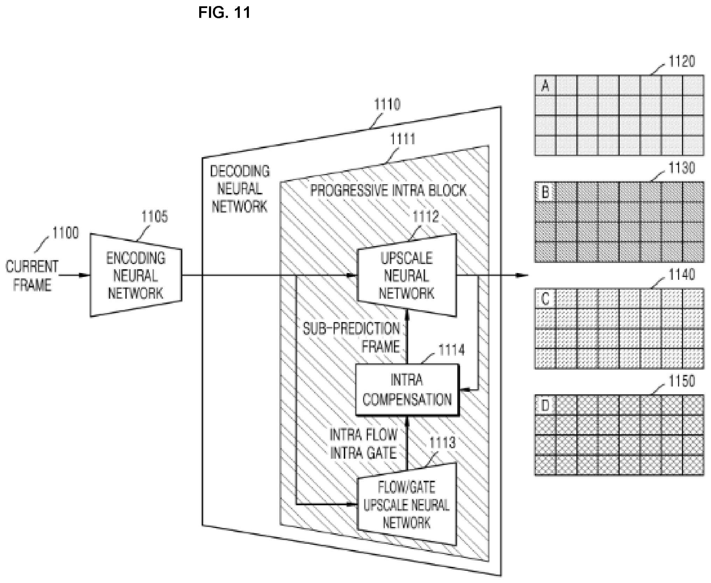

FIG. 11 is a diagram for describing a method of progressively decoding a plurality of sub-frames by using a neural network and an intra flow according to an embodiment of the present disclosure.

Referring to FIG. 11, a current frame 1100 is input to an encoding neural network 1105 and is output as feature data for the current frame 1100.

As the feature data for the current frame 1100 is input to a progressive intra block 1111 in a decoding neural network 1110, a first sub-frame 1120, a second sub-frame 1130, a third sub-frame 1140, and a fourth sub-frame 1150 are decoded.

Specifically, as the feature data for the current frame 1100 is input to an upscale neural network 1112 in the progressive intra block 1111, the first sub-frame 1120 is first decoded according to a pre-determined decoding order. The upscale neural network 1112 is used to upscale the feature data for the current frame 1100 because the feature data for the current frame 1100 has a reduced size compared to an original size of the current frame 1100. The pre-determined decoding order may be determined according to a learning or training result of the upscale neural network 1112 for previous frames.

After the first sub-frame 1120 is decoded, as the feature data for the current frame 1100 is input to a flow/gate upscale neural network 1113 in the progressive intra block 1111, an intra flow and an intra gate for the first sub-frame 1120 of the second sub-frame 1130 are obtained. A second sub-prediction frame for the second sub-frame 1130 is obtained by performing intra compensation 1114 by using the decoded first sub-frame 1120 and the intra flow and the intra gate for the first sub-frame 1120 of the second sub-frame 1130. As the feature data for the current frame 1100 and the second sub-prediction frame are input to the upscale neural network 1112, the second sub-frame 1130 is decoded.

After the second sub-frame 1130 is decoded, as the feature data for the current frame 1100 is input to the flow/gate upscale neural network 1113 in the progressive intra block 1111, an intra flow and an intra gate for the first sub-frame 1120 of the third sub-frame 1140 and an intra flow and an intra gate for the second sub-frame 1130 of the third sub-frame 1140 are obtained. A third sub-prediction frame for the third sub-frame 1140 is obtained by performing the intra compensation 1114 by using the decoded first sub-frame 1120, the decoded second sub-frame 1130, the intra flow and the intra gate for the first sub-frame 1120 of the third sub-frame 1140, and the intra flow and the intra gate for the second sub-frame 1130 of the third sub-frame 1140. As the feature data for the current frame 1100 and the third sub-prediction frame are input to the upscale neural network 1112, the third sub-frame 1140 is decoded.

After the third sub-frame 1140 is decoded, as the feature data for the current frame 1100 is input to the flow/gate upscale neural network 1113 in the progressive intra block 1111, an intra flow and an intra gate for the first sub-frame 1120 of the fourth sub-frame 1150, an intra flow and an intra gate for the second sub-frame 1130 of the fourth sub-frame 1150, and an intra flow and an intra gate for the third sub-frame 1140 of the fourth sub-frame 1150 are obtained. A fourth sub-prediction frame for the fourth sub-frame 1150 is obtained by performing the intra compensation 1114 by using the decoded first sub-frame 1120, the decoded second sub-frame 1130, the decoded third sub-frame 1140, the intra flow and the intra gate for the first sub-frame 1120 of the fourth sub-frame 1150, the intra flow and the intra gate for the second sub-frame 1130 of the fourth sub-frame 1150, and the intra flow and the intra gate for the third sub-frame 1140 of the fourth sub-frame 1150. As the feature data for the current frame 1100 and the fourth sub-prediction frame are input to the upscale neural network 1114, the fourth sub-frame 1150 is decoded.

The current frame is reconstructed based on the decoded first sub-frame 1120, the decoded second sub-frame 1130, the decoded third sub-frame 1140, and the decoded fourth sub-frame 1150.

According to an embodiment of the present disclosure, only an intra flow may be used without using an intra gate. This may correspond to a case where an intra gate value is 1. In the progressive intra block 1111, because the intra compensation is performed in a pixel domain, the intra flow of the progressive intra block 1111 is in the pixel domain.

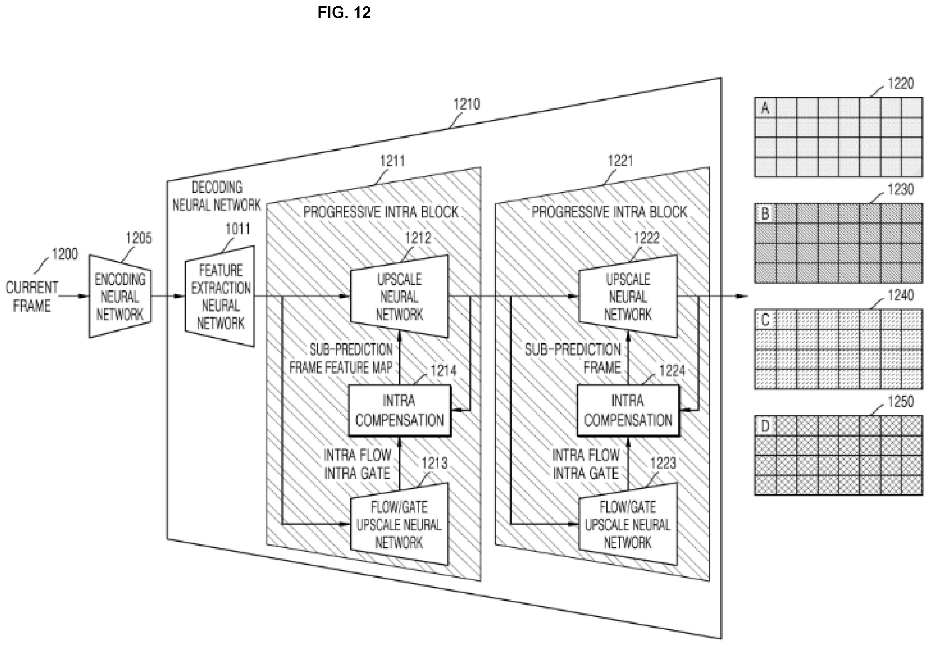

Although there is one progressive intra block in FIG. 11, there may be a plurality of progressive intra blocks. Hereinafter, a configuration in which there are two progressive intra blocks will be described with reference to FIG. 12.

FIG. 12 is a diagram for describing a method of progressively decoding a plurality of sub-frames by using a neural network and an intra flow according to an embodiment of the present disclosure.

Referring to FIG. 12, a current frame 1200 is input to an encoding neural network 1205 and is output as feature data for the current frame 1200.

As the feature data for the current frame 1200 is input to a first progressive intra block 1211 and a second progressive intra block 1221 in a decoding neural network 1210, a first sub-frame 1220, a second sub-frame 1230, a third sub-frame 1240, and a fourth sub-frame 1250 are decoded.

Specifically, as the feature data for the current frame 1200 is input to an upscale neural network 1212 in the first progressive intra block 1211, a first sub-frame feature map is first obtained according to a pre-determined decoding order. The pre-determined decoding order may be determined according to a learning or training result of the upscale neural network 1212 for previous frames.

After the first sub-frame feature map is obtained, as the feature data for the current frame 1200 is input to a flow/gate upscale neural network 1213 in the first progressive intra block 1211, an intra flow and an intra gate for the first sub-frame feature map of a second sub-frame feature map are obtained. A second sub-prediction frame feature map for the second sub-frame feature map is obtained by performing intra compensation 1214 by using the obtained first sub-frame feature map, and the intra flow and the intra gate for the first sub-frame feature map of the second sub-frame feature map. As the feature data for the current frame 1200 and the second sub-prediction frame feature map are input to the upscale neural network 1212, the second sub-frame feature map is obtained.

After the second sub-frame feature map is obtained, as the feature data for the current frame 1200 is input to the flow/gate upscale neural network 1213 in the first progressive intra block 1212, an intra flow and an intra gate for the first sub-frame feature map of a third sub-frame feature map and an intra flow and an intra gate for the second sub-frame feature map of the third sub-frame feature map are obtained. A third sub-prediction frame feature map for the third sub-frame feature map is obtained by performing the intra compensation 1214 by using the obtained first sub-frame feature map, the obtained second sub-frame feature map, the intra flow and the intra gate for the first sub-frame feature map of the third sub-frame feature map, and the intra flow and the intra gate for the second sub-frame feature map of the third sub-frame feature map. As the feature data for the current frame 1200 and the third sub-prediction frame feature map are input to the upscale neural network 1214, the third sub-frame feature map is obtained.

After the third sub-frame feature map is obtained, as the feature data for the current frame 1200 is input to the flow/gate upscale neural network 1213 in the first progressive intra block 1211, an intra flow and an intra gate for the first sub-frame feature map of a fourth sub-frame feature map, an intra flow and an intra gate for the second sub-frame feature map of the fourth sub-frame feature map, and an intra flow and an intra gate for the third sub-frame feature map of the fourth sub-frame feature map are obtained. A fourth sub-prediction frame feature map for the fourth sub-frame feature map is obtained by performing the intra compensation 1214 by using the obtained first sub-frame feature map, the obtained second sub-frame feature map, the obtained third sub-frame feature map, the intra flow and the intra gate for the first sub-frame feature map of the fourth sub-frame feature map, the intra flow and the intra gate for the second sub-frame feature map of the fourth sub-frame feature map, and the intra flow and the intra gate for the third sub-frame feature map of the fourth sub-frame feature map. As the feature extraction data for the current frame 1200 and the fourth sub-prediction frame feature map are input to the upscale neural network 1211, the fourth sub-frame feature map is obtained.

A feature map for the current frame 1200 is obtained based on the obtained first sub-frame feature map, the obtained second sub-frame feature map, the obtained third sub-frame feature map, and the obtained fourth sub-frame feature map.

As the feature map for the current frame 1200 is input to an upscale neural network 1222 in the second progressive intra block 1221, the first sub-frame 1220 is first decoded according to a pre-determined decoding order. The feature map for the current frame 1200 is data representing a feature of the current frame based on a neural network, and may be greater than the feature data for the current frame 1200 and less than the current frame 1200. The pre-determined decoding order may be determined according to a learning or training result of the upscale neural network 1222 for previous frames.

After the first sub-frame 1220 is decoded, as the feature map for the current frame 1200 is input to a flow/gate upscale neural network 1223 in the second progressive intra block 1221, an intra flow and an intra gate for the first sub-frame 1220 of the second sub-frame 1230 are obtained. A second sub-prediction frame for the second sub-frame 1230 is obtained by performing intra compensation 1224 by using the decoded first sub-frame 1220 and the intra flow and the intra gate for the first sub-frame 1220 of the second sub-frame 1230. As the feature map for the current frame 1200 and the second sub-prediction frame are input to the upscale neural network 1222, the second sub-frame 1230 is decoded.

After the second sub-frame 1230 is decoded, as the feature map for the current frame 1200 is input to the flow/gate upscale neural network 1223 in the second progressive intra block 1221, an intra flow and an intra gate for the first sub-frame 1220 of the third sub-frame 1240 and an intra flow and an intra gate for the second sub-frame 1230 of the third sub-frame 1240 are obtained. A third sub-prediction frame for the third sub-frame 1240 is obtained by performing the intra compensation 1224 by using the decoded first sub-frame 1220, the decoded second sub-frame 1230, the intra flow and the intra gate for the first sub-frame 1220 of the third sub-frame 1240, and the intra flow and the intra gate for the second sub-frame 1230 of the third sub-frame 1240. As the feature map for the current frame 1200 and the third sub-prediction frame are input to the upscale neural network 1222, the third sub-frame 1240 is decoded.

After the third sub-frame 1240 is decoded, as the feature map for the current frame 1200 is input to the flow/gate upscale neural network 1223 in the second progressive intra block 1221, an intra flow and an intra gate for the first sub-frame 1220 of the fourth sub-frame 1250, an intra flow and an intra gate for the second sub-frame 1230 of the fourth sub-frame 1250, and an intra flow and an intra gate for the third sub-frame 1240 of the fourth sub-frame 1250 are obtained. A fourth sub-prediction frame for the fourth sub-frame 1250 is obtained by performing the intra compensation 1224 by using the decoded first sub-frame 1220, the decoded second sub-frame 1230, the decoded third sub-frame 1240, the intra flow and the intra gate for the first sub-frame 1220 of the fourth sub-frame 1250, the intra flow and the intra gate for the second sub-frame 1230 of the fourth sub-frame 1250, and the intra flow and the intra gate for the third sub-frame 1240 of the fourth sub-frame 1250. As the feature map for the current frame 1200 and the fourth sub-prediction frame are input to the upscale neural network 1222, the fourth sub-frame 1250 is decoded.

The current frame is reconstructed based on the decoded first sub-frame 1220, the decoded second sub-frame 1230, the decoded third sub-frame 1240, and the decoded fourth sub-frame 1250.

According to an embodiment of the present disclosure, only an intra flow may be used without using an intra gate. This may correspond to a case where an intra gate value is 1. In the first progressive intra block 1211, because the intra compensation is performed in a feature map domain, the intra flow of the first progressive intra block 1211 is in the feature map domain, and in the second progressive intra block 1221, because the intra compensation is performed in a pixel domain, the intra flow of the second progressive intra block 1221 is in the pixel domain.

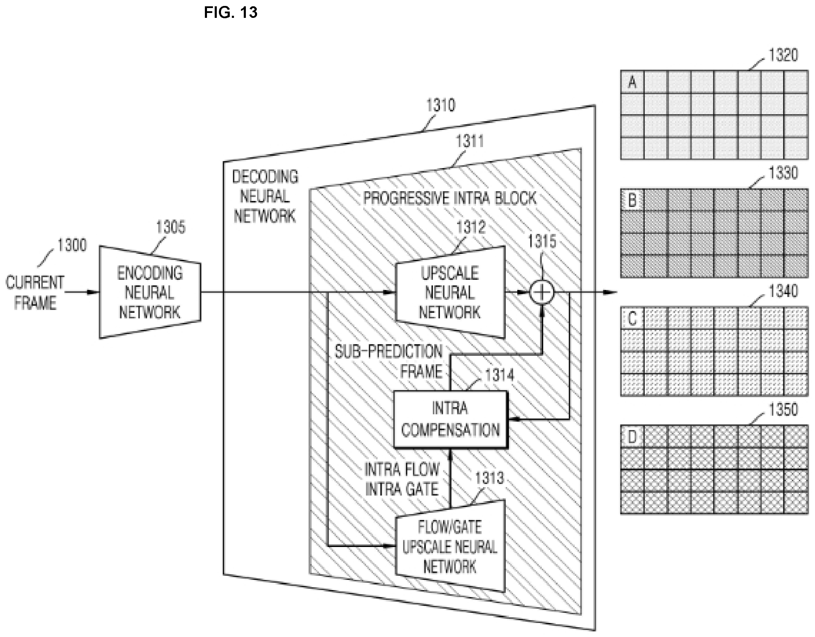

FIG. 13 is a diagram for describing a method of progressively decoding a plurality of sub-frames by using a neural network and an intra flow according to an embodiment of the present disclosure.

Referring to FIG. 13, a current frame 1300 is input to an encoding neural network 1305 and is output as feature data for the current frame 1300.

As the feature data for the current frame 1300 is input to a progressive intra block 1311 in a decoding neural network 1310, a first sub-frame 1320, a second sub-frame 1330, a third sub-frame 1340, and a fourth sub-frame 1350 are decoded.

Specifically, as the feature data for the current frame 1300 is input to an upscale neural network 1312 in the progressive intra block 1311, the first sub-frame 1320 is first decoded according to a pre-determined decoding order. The upscale neural network 1312 is used to upscale the feature data for the current frame 1300 because the feature data for the current frame 1300 has a reduced size compared to an original size of the current frame 1300. The pre-determined decoding order may be determined according to a learning or training result of the upscale neural network 1312 for previous frames.

After the first sub-frame 1320 is decoded, as the feature data for the current frame 1300 is input to a flow/gate upscale neural network 1313 in the progressive intra block 1311, an intra flow and an intra gate for the first sub-frame 1320 of the second sub-frame 1330 are obtained. A second sub-prediction frame for the second sub-frame 1130 is obtained by performing intra compensation 1314 by using the decoded first sub-frame 1320 and the intra flow and the intra gate for the first sub-frame 1320 of the second sub-frame 1330. As the feature data for the current frame 1300 to the upscale neural network 1312, a second sub-residual frame is obtained. As the second sub-prediction frame and the second sub-residual frame are added (1315), the second sub-frame 1330 is decoded.

After the second sub-frame 1330 is decoded, as the feature data for the current frame 1300 is input to the flow/gate upscale neural network 1313 in the progressive intra block 1311, an intra flow and a intra gate for the first sub-frame 1320 of the third sub-frame 1340 and an intra flow and an intra gate for the second sub-frame 1330 of the third sub-frame 1340 are obtained. A third sub-prediction frame for the third sub-frame 1340 is obtained by performing the intra compensation 1314 by using the decoded first sub-frame 1320, the decoded second sub-frame 1330, and the intra flow and the intra gate for the first sub-frame 1320 of the third sub-frame 1340, and the intra flow and the intra gate for the second sub-frame 1330 of the third sub-frame 1340. As the feature data for the current frame 1300 is input to the upscale neural network 1312, a third sub-residual frame is obtained. As the third sub-prediction frame and the third sub-residual frame are added (1315), the third sub-frame 1340 is decoded.

After the third sub-frame 1340 is decoded, as the feature data for the current frame 1300 is input to the flow/gate upscale neural network 1313 in the progressive intra block 1311, an intra flow and an intra gate for the first sub-frame 1320 of the fourth sub-frame 1350, an intra flow and an intra gate for the second sub-frame 1330 of the fourth sub-frame 1350, and an intra flow and an intra gate for the third sub-frame 1340 of the fourth sub-frame 1350 are obtained. A fourth sub-prediction frame for the fourth sub-frame 1350 is obtained by performing the intra compensation 1314 by using the decoded first sub-frame 1320, the decoded second sub-frame 1330, the decoded third sub-frame 1340, and the intra flow and the intra gate for the first sub-frame 1320 of the fourth sub-frame 1350, the intra flow and the intra gate for the second sub-frame 1330 of the fourth sub-frame 1350, and the intra flow and the intra gate for the third sub-frame 1340 of the fourth sub-frame 1350. As the feature data for the current frame 1300 is input to the upscale neural network 1314, a fourth sub-residual frame is obtained. As the fourth sub-prediction frame and the fourth sub-residual frame are added (1315), the fourth sub-frame 1350 is decoded.

The current frame is reconstructed based on the decoded first sub-frame 1320, the decoded second sub-frame 1330, the decoded third sub-frame 1340, and the decoded fourth sub-frame 1350.

According to an embodiment of the present disclosure, only an intra flow may be used without using an intra gate. This may correspond to a case where an intra gate value is 1. In the progressive intra block 1311, because the intra compensation is performed in a pixel domain, the intra flow of the progressive intra block 1311 is in the pixel domain.

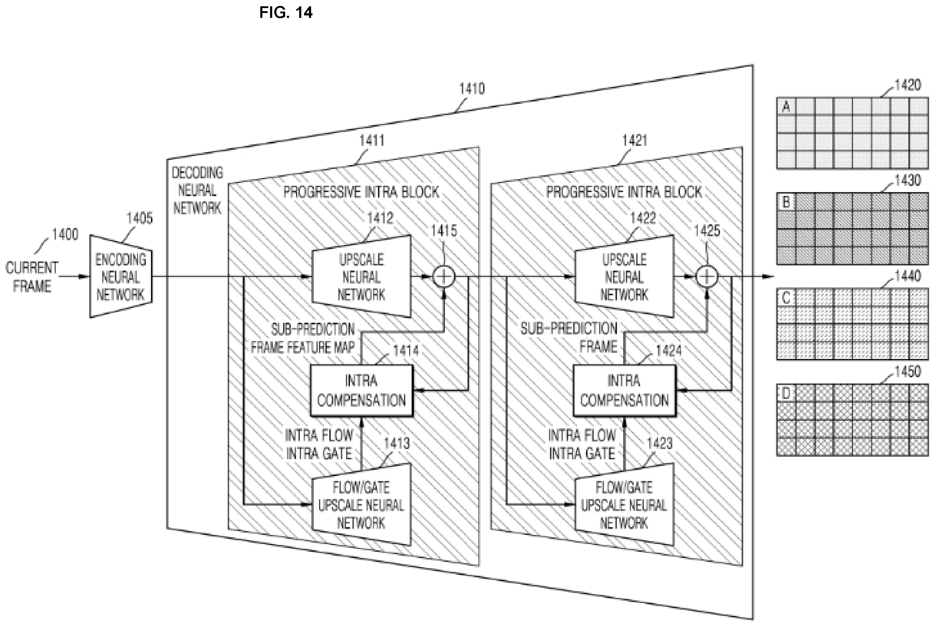

Although there is one progressive intra block in FIG. 13, there may be a plurality of progressive intra blocks. Hereinafter, a configuration in which there are two progressive intra blocks will be described in FIG. 14.

FIG. 14 is a diagram for describing a method of progressively decoding a plurality of sub-frames by using a neural network and an intra flow according to an embodiment of the present disclosure.

Referring to FIG. 14, a current frame 1400 is input to an encoding neural network 1405 and is output as feature data for the current frame 1400.

As the feature data for the current frame 1400 is input to a first progressive intra block 1411 and a second progressive intra block 1421 in a decoding neural network 1410, a first sub-frame 1420, a second sub-frame 1430, a third sub-frame 1440, and a fourth sub-frame 1450 are decoded.

Specifically, as the feature data for the current frame 1400 is input to an upscale neural network 1412 in the first progressive intra block 1411, a first sub-frame feature map is first obtained according to a pre-determined decoding order. The pre-determined decoding order may be determined according to a learning or training result of the upscale neural network 1412 for previous frames.

After the first sub-frame feature map is obtained, as the feature data for the current frame 1400 is input to a flow/gate upscale neural network 1413 in the first progressive intra block 1411, an intra flow and an intra gate for the first sub-frame feature map of a second sub-frame feature map are obtained. A second sub-prediction frame feature map for the second sub-frame feature map is obtained by performing intra compensation 1414 by using the obtained first sub-frame feature map, and the intra flow and the intra gate for the first sub-frame feature map of the second sub-frame feature map. As the feature data for the current frame 1400 is input to the upscale neural network 1412, a second sub-residual frame feature map is obtained. As the second sub-prediction frame feature map and the second sub-residual frame feature map are added (1415), the second sub-frame feature map is obtained.

After the second sub-frame feature map is obtained, as the feature data for the current frame 1400 is input to the flow/gate upscale neural network 1413 in the first progressive intra block 1412, an intra flow and an intra gate for the first sub-frame feature map of a third sub-frame feature map and an intra flow and an intra gate for the second sub-frame feature map of the third sub-frame feature map are obtained. A third sub-prediction frame feature map for the third sub-frame feature map is obtained by performing the intra compensation 1414 by using the obtained first sub-frame feature map, the obtained second sub-frame feature map, the intra flow and the intra gate for the first sub-frame feature map of the third sub-frame feature map, and the intra flow and the intra gate for the second sub-frame feature map of the third sub-frame feature map. As the feature data for the current frame 1400 is input to the upscale neural network 1414, a third sub-residual frame feature map is obtained. As the third sub-prediction frame feature map and the third sub-residual frame feature map are added (1415), the third sub-frame feature map is obtained.

After the third sub-frame feature map is obtained, as the feature data for the current frame 1400 is input to the flow/gate upscale neural network 1413 in the first progressive intra block 1411, an intra flow and an intra gate for the first sub-frame feature map of a fourth sub-frame feature map, an intra flow and an intra gate for the second sub-frame feature map of the fourth sub-frame feature map, and an intra flow and an intra gate for the third sub-frame feature map of the fourth sub-frame feature map are obtained. A fourth sub-prediction frame feature map for the fourth sub-frame feature map is obtained by performing the intra compensation 1414 by using the obtained first sub-frame feature map, the obtained second sub-frame feature map, the obtained third sub-frame feature map, the intra flow and the intra gate for the first sub-frame feature map of the fourth sub-frame feature map, the intra flow and the intra gate for the second sub-frame feature map of the fourth sub-frame feature map, and the intra flow and the intra gate for the third sub-frame feature map of the fourth sub-frame feature map. As feature extraction data for the current frame 1400 is input to the upscale neural network 1411, a fourth sub-residual frame feature map is obtained. As the fourth sub-prediction frame feature map and the fourth sub-residual frame feature map are added (1415), the fourth sub-frame feature map is obtained.

A feature map for the current frame 1400 is obtained based on the obtained first sub-frame feature map, the obtained second sub-frame feature map, the obtained third sub-frame feature map, and the obtained fourth sub-frame feature map.

As the feature map for the current frame 1400 is input to an upscale neural network 1422 in the second progressive intra block 1421, the first sub-frame 1420 is first decoded according to a pre-determined decoding order. The feature map for the current frame 1400 is data representing a feature of the current frame based on a neural network, and may be greater than the feature data for the current frame 1400 and less than the current frame 1400. The pre-determined decoding order may be determined according to a learning or training result of the upscale neural network 1422 for previous frames.

After the first sub-frame 1420 is decoded, as the feature map for the current frame 1400 is input to a flow/gate upscale neural network 1423 in the second progressive intra block 1421, an intra flow and an intra gate for the first sub-frame 1420 of the second sub-frame 1430 are obtained. A second sub-prediction frame for the second sub-frame 1430 is obtained by performing intra compensation 1424 by using the decoded first sub-frame 1420, and the intra flow and the intra gate for the first sub-frame 1420 of the second sub-frame 1430. As the feature map for the current frame 1400 is input to the upscale neural network 1222, a second sub-residual frame is obtained. As the second sub-residual frame and the second sub-prediction frame are added (1425), the second sub-frame 1430 is decoded.

After the second sub-frame 1430 is decoded, as the feature map for the current frame 1400 is input to the flow/gate upscale neural network 1423 in the second progressive intra block 1421, an intra flow and an intra gate for the first sub-frame 1420 of the third sub-frame 1440 and an intra flow and an intra gate for the second sub-frame 1430 of the third sub-frame 1440 are obtained. A third sub-prediction frame for the third sub-frame 1440 is obtained by performing the intra compensation 1424 by using the decoded first sub-frame 1420, the decoded second sub-frame 1430, the intra flow and the intra gate for the first sub-frame 1420 of the third sub-frame 1440, and the intra flow and the intra gate for the second sub-frame 1430 of the third sub-frame 1440. As the feature map for the current frame 1400 is input to the upscale neural network 1422, a third sub-residual frame is obtained. As the third sub-residual frame and the third sub-prediction frame are added (1425), the third sub-frame 1440 is decoded.

After the third sub-frame 1440 is decoded, as the feature map for the current frame 1400 is input to the flow/gate upscale neural network 1423 in the second progressive intra block 1421, an intra flow and an intra gate for the first sub-frame 1420 of the fourth sub-frame 1450, an intra flow and an intra gate for the second sub-frame 1430 of the fourth sub-frame 1450, and an intra flow and an intra gate for the third sub-frame 1440 of the fourth sub-frame 1450 are obtained. A fourth sub-prediction frame for the fourth sub-frame 1450 is obtained by performing the intra compensation 1424 by using the decoded first sub-frame 1420, the decoded second sub-frame 1430, the decoded third sub-frame 1440, the intra flow and the intra gate for the first sub-frame 1420 of the fourth sub-frame 1450, the intra flow and the intra gate for the second sub-frame 1430 of the fourth sub-frame 1450, and the intra flow and the intra gate for the third sub-frame 1440 of the fourth sub-frame 1450. As the feature map for the current frame 1400 is input to the upscale neural network 1422, a fourth sub-residual frame is obtained. As the fourth sub-residual frame and the fourth sub-prediction frame are added (1425), the fourth sub-frame 1450 is decoded.

The current frame is reconstructed based on the decoded first sub-frame 1420, the decoded second sub-frame 1430, the decoded third sub-frame 1440, and the decoded fourth sub-frame 1450.

According to an embodiment of the present disclosure, only an intra flow may be used without using an intra gate. This may correspond to a case where an intra gate value is 1. In the first progressive intra block 1411, because the intra compensation is performed in a feature map domain, the intra flow of the first progressive intra block 1411 is in the feature map domain, and in the second progressive intra block 1421, because the intra compensation is performed in a pixel domain, the intra flow of the second progressive intra block 1421 is in the pixel domain.

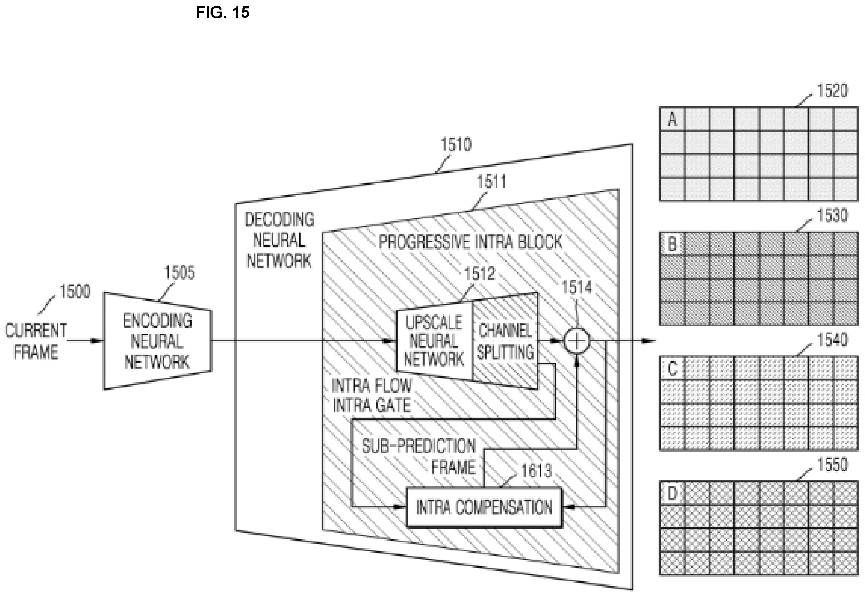

FIG. 15 is a diagram for describing a method of progressively decoding a plurality of sub-frames by using a neural network and an intra flow according to an embodiment of the present disclosure.

Referring to FIG. 15, a current frame 1500 is input to an encoding neural network 1505 and is output as feature data for the current frame 1500.

As the feature data for the current frame 1500 is input to a progressive intra block 1511 in a decoding neural network 1510, a first sub-frame 1520, a second sub-frame 1530, a third sub-frame 1540, and a fourth sub-frame 1550 are decoded.

Specifically, as the feature data for the current frame 1500 is input to an upscale neural network 1512 in the progressive intra block 1511, the first sub-frame 1320 is first decoded according to a pre-determined decoding order. The upscale neural network 1512 is used to upscale the feature data for the current frame 1500 because the feature data for the current frame 1500 has a reduced size compared to an original size of the current frame 1500. When data is output from the upscale neural network 1512, channel splitting is performed, and thus, the data is output for each channel. Data of some channels may be data for an intra flow, data of some channels may be data for an intra gate, and data of the remaining channels may be data for a sub-frame. For example, when there is one intra flow, data of two channels is data for the intra flow, and because an intra gate is not required when there is one intra flow, data of channels other than the two channels may be data for a sub-frame. In addition, when there are four intra flows, data of eight channels may be data for the intra flows, data of one channel may be data for an intra gate, and data of the remaining channels may be data for a sub-frame. The pre-determined decoding order may be determined according to a learning or training result of the upscale neural network 1512 for previous frames.

After the first sub-frame 1520 is decoded, as the feature data for the current frame 1500 is input to the upscale neural network 1512 in the progressive intra block 1511, an intra flow and an intra gate for the first sub-frame 1520 of the second sub-frame 1530 are obtained through the channel splitting. A second sub-prediction frame for the second sub-frame 1530 is obtained by performing intra compensation 1513 by using the decoded first sub-frame 1520, and the intra flow and the intra gate for the first sub-frame 1520 of the second sub-frame 1530. As the feature data for the current frame 1500 is input to the upscale neural network 1512, a second sub-residual frame is obtained through the channel splitting. As the second sub-prediction frame and the second sub-residual frame are added (1514), the second sub-frame 1530 is decoded.

After the second sub-frame 1530 is decoded, as the feature data for the current frame 1500 is input to the upscale neural network 1512 in the progressive intra block 1511, an intra flow and a intra gate for the first sub-frame 1520 of the third sub-frame 1540 and an intra flow and an intra gate for the second sub-frame 1530 of the third sub-frame 1540 are obtained through the channel splitting. A third sub-prediction frame for the third sub-frame 1540 is obtained by performing the intra compensation 1513 by using the decoded first sub-frame 1520, the decoded second sub-frame 1530, the intra flow and the intra gate for the first sub-frame 1520 of the third sub-frame 1540, and the intra flow and the intra gate for the second sub-frame 1530 of the third sub-frame 1540. As the feature data for the current frame 1500 is input to the upscale neural network 1512, a third sub-residual frame is obtained through the channel splitting. As the third sub-prediction frame and the third sub-residual frame are added (1514), the third sub-frame 1540 is decoded.

After the third sub-frame 1540 is decoded, as the feature data for the current frame 1500 is input to the upscale neural network 1512 in the progressive intra block 1511, an intra flow and an intra gate for the first sub-frame 1520 of the fourth sub-frame 1550, an intra flow and an intra gate for the second sub-frame 1530 of the fourth sub-frame 1550, and an intra flow and an intra gate for the third sub-frame 1540 of the fourth sub-frame 1550 are obtained through the channel splitting. A fourth sub-prediction frame for the fourth sub-frame 1550 may be obtained by performing the intra compensation 1513 by using the decoded first sub-frame 1520, the decoded second sub-frame 1530, the decoded third sub-frame 1540, the intra flow and the intra gate for the first sub-frame 1520 of the fourth sub-frame 1550, the intra flow and the intra gate for the second sub-frame 1530 of the fourth sub-frame 1550, and the intra flow and the intra gate for the third sub-frame 1540 of the fourth sub-frame 1550. As the feature data for the current frame 1500 is input to the upscale neural network 1512, a fourth sub-residual frame is obtained through the channel splitting. As the fourth sub-prediction frame and the fourth sub-residual frame are added (1514), the fourth sub-frame 1550 is decoded.

The current frame is reconstructed based on the decoded first sub-frame 1520, the decoded second sub-frame 1530, the decoded third sub-frame 1540, and the decoded fourth sub-frame 1550.

According to an embodiment of the present disclosure, only an intra flow may be used without using an intra gate. This may correspond to a case where an intra gate value is 1. In the progressive intra block 1511, because the intra compensation is performed in a pixel domain, the intra flow of the progressive intra block 1511 is in the pixel domain.

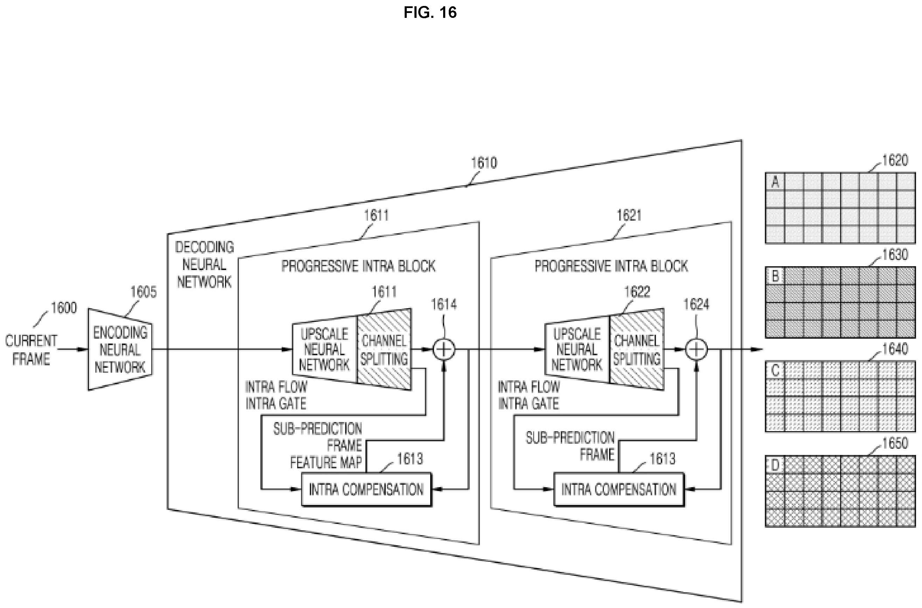

Although there is one progressive intra block in FIG. 15, there may be a plurality of progressive intra blocks. Hereinafter, a configuration in which there are two progressive intra blocks will be described with reference to FIG. 16.

FIG. 16 is a diagram for describing a method of progressively decoding a plurality of sub-frames by using a neural network and an intra flow according to an embodiment of the present disclosure.

Referring to FIG. 16, a current frame 1600 is input to an encoding neural network 1605 and is output as feature data for the current frame 1600.

As the feature data for the current frame 1600 is input to a first progressive intra block 1611 and a second progressive intra block 1621 in a decoding neural network 1610, a first sub-frame 1620, a second sub-frame 1630, a third sub-frame 1640, and a fourth sub-frame 1650 are decoded.

Specifically, as the feature data for the current frame 1600 is input to an upscale neural network 1612 in the first progressive intra block 1611, a first sub-frame feature map is first obtained according to a pre-determined decoding order through channel splitting. The predetermined decoding order may be determined according to a learning or training result of the upscale neural network 1612 for previous frames.

After the first sub-frame feature map is obtained, as the feature data for the current frame 1600 is input to the upscale neural network 1613 in the first progressive intra block 1611, an intra flow and an intra gate for the first sub-frame feature map of a second sub-frame feature map are obtained through the channel splitting. A second sub-prediction frame feature map for the second sub-frame feature map is obtained by performing intra compensation 613 by using the obtained first sub-frame feature map, and the intra flow and the intra gate for the first sub-frame feature map of the second sub-frame feature map. As the feature data for the current frame 1600 is input to the upscale neural network 1612, a second sub-residual frame feature map is obtained through the channel splitting. As the second sub-prediction frame feature map and the second sub-residual frame feature map are added (1614), the second sub-frame feature map is obtained.

After the second sub-frame feature map is obtained, as the feature data for the current frame 1600 is input to the upscale neural network 1612 in the first progressive intra block 1612, an intra flow and an intra gate for the first sub-frame feature map of a third sub-frame feature map and an intra flow and an intra gate for the second sub-frame feature map of the third sub-frame feature map are obtained through the channel splitting. A third sub-prediction frame feature map for the third sub-frame feature map is obtained by performing the intra compensation 1613 by using the obtained first sub-frame feature map, the obtained second sub-frame feature map, the intra flow and the intra gate for the first sub-frame feature map of the third sub-frame feature map, and the intra flow and the intra gate for the second sub-frame feature map of the third sub-frame feature map. As the feature data for the current frame 1600 is input to the upscale neural network 1612, a third sub-residual frame feature map is obtained through the channel splitting. As the third sub-prediction frame feature map and the third sub-residual frame feature map are added (1614), the third sub-frame feature map is obtained.

After the third sub-frame feature map is obtained, as the feature data for the current frame 1600 is input to the upscale neural network 1612 in the first progressive intra block 1611, an intra flow and an intra gate for the first sub-frame feature map of a fourth sub-frame feature map, an intra flow and an intra gate for the second sub-frame feature map of the fourth sub-frame feature map, and an intra flow and an intra gate for the third sub-frame feature map of the fourth sub-frame feature map are obtained through the channel splitting. A fourth sub-prediction frame feature map for the fourth sub-frame feature map is obtained by performing the intra compensation 1613 by using the obtained first sub-frame feature map, the obtained second sub-frame feature map, the obtained third sub-frame feature map, the intra flow and the intra gate for the first sub-frame feature map of the fourth sub-frame feature map, the intra flow and the intra gate for the second sub-frame feature map of the fourth sub-frame feature map, and the intra flow and the intra gate for the third sub-frame feature map of the fourth sub-frame feature map. As feature extraction data for the current frame 1600 is input to the upscale neural network 1612, a fourth sub-residual frame feature map is obtained through the channel splitting. As the fourth sub-prediction frame feature map and the fourth sub-residual frame feature map are added (1614), a fourth sub-frame feature map is obtained.

A feature map for the current frame 1600 is obtained based on the obtained first sub-frame feature map, the obtained second sub-frame feature map, the obtained third sub-frame feature map, and the obtained fourth sub-frame feature map.

As the feature map for the current frame 1600 is input to an upscale neural network 1622 in the second progressive intra block 1621, the first sub-frame 1620 is first decoded according to a pre-determined decoding order. The feature map for the current frame 1600 is data representing a feature of the current frame based on a neural network, and may be greater than the feature data for the current frame 1600 and less than the current frame 1600. The pre-determined decoding order may be determined according to a learning or training result of the upscale neural network 1622 for previous frames.

After the first sub-frame 1620 is decoded, as the feature map for the current frame 1600 is input to the upscale neural network 1622 in the second progressive intra block 1621, an intra flow and an intra gate for the first sub-frame 1620 of the second sub-frame 1630 are obtained through the channel splitting. A second sub-prediction frame for the second sub-frame 1630 is obtained by performing intra compensation 1623 by using the decoded first sub-frame 1620, the intra flow and the intra gate for the first sub-frame 1620 of the second sub-frame 1630. As the feature map for the current frame 1600 is input to the upscale neural network 1622, a second sub-residual frame is obtained through the channel splitting. As the second sub-residual frame and the second sub-prediction frame are added (1624), the second sub-frame 1630 is decoded.

After the second sub-frame 1630 is decoded, as the feature map for the current frame 1600 is input to the upscale neural network 1622 in the second progressive intra block 1621, an intra flow and an intra gate for the first sub-frame 1620 of the third sub-frame 1640 and an intra flow and an intra gate for the second sub-frame 1630 of the third sub-frame 1640 are obtained through the channel splitting. A third sub-prediction frame for the third sub-frame 1640 is obtained by performing the intra compensation 1623 by using the decoded first sub-frame 1620, the decoded second sub-frame 1630, the intra flow and the intra gate for the first sub-frame 1620 of the third sub-frame 1640, and the intra flow and the intra gate for the second sub-frame 1630 of the third sub-frame 1640. As the feature map for the current frame 1600 is input to the upscale neural network 1622, a third sub-residual frame is obtained through the channel splitting. As the third sub-residual frame and the third sub-prediction frame are added (1624), the third sub-frame 1640 is decoded.

After the third sub-frame 1640 is decoded, as the feature map for the current frame 1600 is input to the upscale neural network 1622 in the second progressive intra block 1621, an intra flow and an intra gate for the first sub-frame 1620 of the fourth sub-frame 1650, an intra flow and an intra gate for the second sub-frame 1630 of the fourth sub-frame 1650, and an intra flow and an intra gate for the third sub-frame 1640 of the fourth sub-frame 1650 are obtained through the channel splitting. A fourth sub-prediction frame for the fourth sub-frame 1650 is obtained by performing the intra compensation 1623 by using the decoded first sub-frame 1620, the decoded second sub-frame 1630, the decoded third sub-frame 1640, the intra flow and the intra gate for the first sub-frame 1620 of the fourth sub-frame 1650, the intra flow and the intra gate for the second sub-frame 1630 of the fourth sub-frame 1650, and the intra flow and the intra gate for the third sub-frame 1640 of the fourth sub-frame 1650. As the feature map for the current frame 1600 is input to the upscale neural network 1622, a fourth sub-residual frame is obtained through the channel splitting. As the fourth sub-residual frame and the fourth sub-prediction frame are added (1624), the fourth sub-frame 1650 is decoded.

The current frame is reconstructed based on the decoded first sub-frame 1620, the decoded second sub-frame 1630, the decoded third sub-frame 1640, and the decoded fourth sub-frame 1650.

According to an embodiment of the present disclosure, only an intra flow may be used without using an intra gate. This may correspond to a case where an intra gate value is 1. In the first progressive intra block 1611, because the intra compensation is performed in a feature map domain, the intra flow of the first progressive intra block 1611 is in the feature map domain, and in the second progressive intra block 1621, because the intra compensation is performed in a pixel domain, the intra flow of the second progressive intra block 1621 is in the pixel domain.

The method using the intra flow described above with reference to FIGS. 8 to 16 may be applied to trained image coding.

In addition, the method using the intra flow described above with reference to FIGS. 8 to 16 may be applied to a motion coding network using an optical flow of learned video coding in the same manner. This is because the optical flow has a strong spatial correlation because movements of all pixels of an object must be the same, and has a strong non-local similarity because movements of all pixels of a boundary of the object must be the same.

In addition, the method using the intra flow described above with reference to FIGS. 8 to 16 may also be applied to a pixel coding network of learned video coding. This is because a pixel has a strong spatial correlation and a strong non-local similarity.

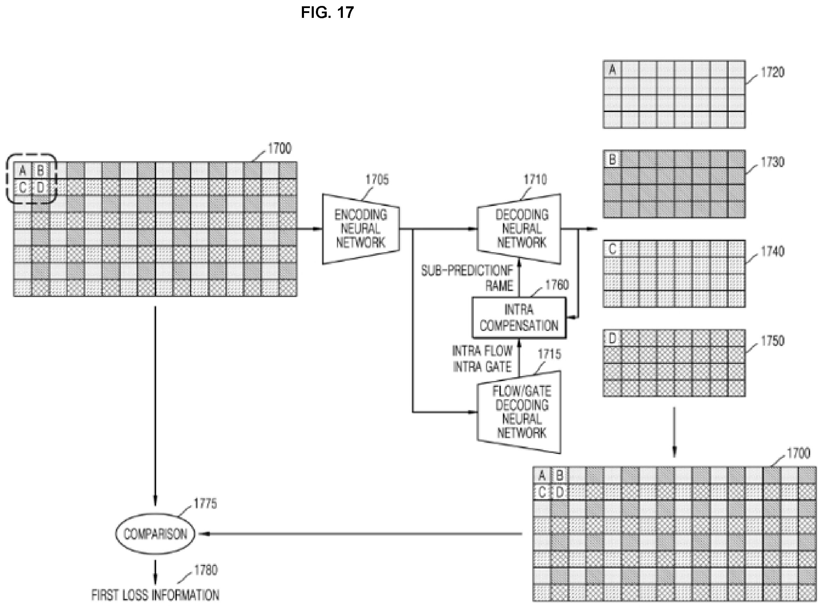

FIG. 17 is a diagram for describing a method of training a neural network used in an image encoding method and an image decoding method according to an embodiment of the present disclosure.

Referring to FIG. 17, an encoding neural network 1705, a decoding neural network 1710, and a flow/gate decoding neural network 1715 may be trained by using a training current frame 1700.

Specifically, the training current frame 1700 is input to the encoding neural network 1705, and feature data for the training current frame 1700 is obtained. As the feature data for the training current frame 1700 is input to the decoding neural network 1710, a training first sub-frame 1720 is obtained.

As the feature data for the training current frame 1700 is input to the flow/gate decoding neural network 1715, an intra flow and an intra gate for the training first sub-frame 1720 of a training second sub-frame 1730 are obtained. Intra compensation 1760 is performed by using the intra flow and the intra gate for the training first sub-frame 1720 of the training second sub-frame 1730 and the obtained training first sub-frame 1720. A training second sub-prediction frame is obtained through the intra compensation 1760. As the feature data for the training current frame 1700 and the training second sub-prediction frame are input to the decoding neural network 1710, the training second sub-frame 1730 is obtained.

As the feature data for the training current frame 1700 is input to the flow/gate decoding neural network 1715, an intra flow and an intra gate for the training first sub-frame 1720 of a training third sub-frame 1740 and an intra flow and an intra gate for the training second sub-frame 1730 of the training third sub-frame 1740 are obtained. The intra compensation 1760 is performed by using the intra flow and the intra gate for the training first sub-frame 1720 of the training third sub-frame 1740, the intra flow and the intra gate for the training second sub-frame 1730 of the training third sub-frame 1740, the obtained training first sub-frame 1720, and the obtained training second sub-frame 1730. A training third sub-prediction frame is obtained through the intra compensation 1760. As the feature data for the training current frame 1700 and the training third sub-prediction frame are input to the decoding neural network 1710, the training third sub-frame 1740 is obtained.

As the feature data for the training current frame 1700 is input to the flow/gate decoding neural network 1715, an intra flow and an intra gate for the training first sub-frame 1720 of a training fourth sub-frame 1750, an intra flow and an intra gate for the training second sub-frame 1730 of the training fourth sub-frame 1750, and an intra flow and an intra gate for the training third sub-frame 1740 of the training fourth sub-frame 1750 are obtained. The intra compensation 1760 is performed by using the intra flow and the intra gate for the training first sub-frame 1720 of the training fourth sub-frame 1750, the intra flow and the intra gate for the training second sub-frame 1730 of the training fourth sub-frame 1750, the intra flow and the intra gate for the training third sub-frame 1740 of the training fourth sub-frame 1750, the obtained training first sub-frame 1720, the obtained training second sub-frame 1730, and the obtained training third sub-frame 1740. A training fourth sub-prediction frame is obtained through the intra compensation 1760. As the feature data for the training current frame 1700 and the training fourth sub-prediction frame are input to the decoding neural network 1710, the training fourth sub-frame 1750 is obtained.

A training reconstructed frame 1770 is obtained by using the obtained training first sub-frame 1720, the obtained training second sub-frame 1730, the obtained training third sub-frame 1740, and the obtained training fourth sub-frame 1750.

In the training process of FIG. 17, the encoding neural network 1705, the decoding neural network 1710, and the flow/gate decoding neural network 1715 may be trained such that the training reconstructed frame 1770 becomes as similar as possible to the training current frame 1700 through comparison 1775. To this end, as shown in FIG. 17, first loss information 1780 may be used to train the encoding neural network 1705, the decoding neural network 1710, and the flow/gate decoding neural network 1715.

The first loss information 1780 may correspond to a difference between the training current frame 1700 and the training reconstructed frame 1770. In an embodiment, the difference between the training current frame 1700 and the training reconstructed frame 1770 may include at least one of an L1-norm value, an L2-norm value, a structural similarity (SSIM) value, a peak signal-to-noise ratio-human vision system (PSNR-HVS) value, a multiscale SSIM (MS-SSIM) value, a variance inflation factor (VIF) value, or a video multimethod assessment fusion (VMAF) value between the training current frame 1700 and the training reconstructed frame 1770.

Because the first loss information 1780 is related to the quality of a reconstructed image, the first loss information 1780 may be referred to as quality loss information.

Second loss information 1790 may be calculated from a bitrate of a bitstream generated as a result of encoding the feature data of the training current frame 1700.

Because the second loss information 1790 is related to encoding efficiency for the feature data of the training current frame 1700, the second loss information may be referred to as compression loss information.

The encoding neural network 1705, the decoding neural network 1710, and the flow/gate decoding neural network 1715 may be trained such that final loss information derived from the first loss information 1780 and/or the second loss information 1790 is reduced or minimized.

In an embodiment, the encoding neural network 1705, the decoding neural network 1710, and the flow/gate decoding neural network 1715 may be trained to reduce or minimize the final loss information while changing values of preset parameters.

In an embodiment, the final loss information may be calculated according to Equation 9 below. [Equation 9] $final loss information = a * first loss information + b * second loss information$

In Equation 9, a and b are weights applied to the first loss information 1780 and the second loss information 1790, respectively.

According to Equation 9, the encoding neural network 1705, the decoding neural network 1710, and the flow/gate decoding neural network 1715 may be trained such that the training reconstructed frame is as similar as possible to the training current frame and the bitrate of the bitstream generated by encoding the feature data of the training current frame is minimized

The training process described with reference to FIG. 17 may be performed by a training device. The training device may be, for example, an image encoding device 2100 or a separate server. Parameters obtained as a training result may be stored in the image encoding device 2100 and an image decoding device 1900.

Although a method of training the neural networks described with reference to FIG. 8 is described with reference to FIG. 17, the neural networks described with reference to FIGS. 9 to 16 may also be trained in a similar manner.

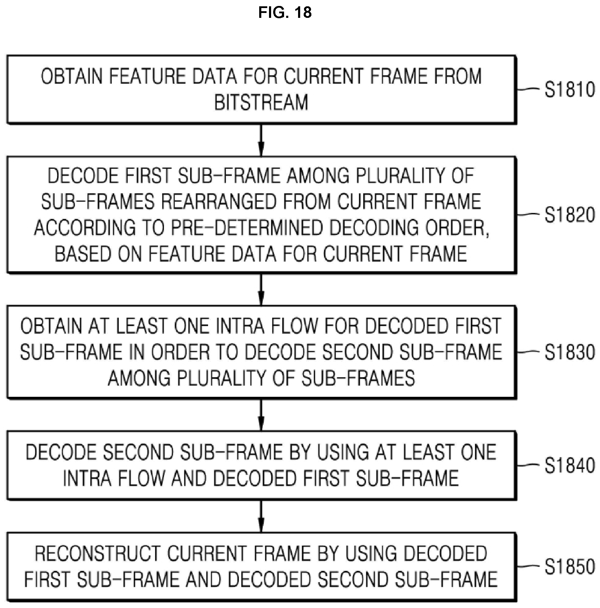

FIG. 18 is a flowchart illustrating an image decoding method according to an embodiment of the present disclosure.

Referring to FIG. 18, in operation S1810, the image decoding device 1900 may obtain feature data for a current frame from a bitstream.

According to an embodiment of the present disclosure, the current frame may be a pixel map including pixels.

According to an embodiment of the present disclosure, the current frame may be a feature map.

In operation S1820, the image decoding device 1900 may decode a first sub-frame among a plurality of sub-frames rearranged from the current frame according to a pre-determined decoding order, based on the feature data for the current frame.

According to an embodiment of the present disclosure, the plurality of sub-frames may be obtained by dividing the current frame into a plurality of pixel groups and rearranging pixels at the same position in the plurality of pixel groups to be included in the same sub-frame.

In operation S1830, the image decoding device 1900 may obtain at least one intra flow for the decoded first sub-frame in order to decode a second sub-frame among the plurality of sub-frames.

According to an embodiment of the present disclosure, the at least one intra flow for the decoded first sub-frame may indicate a reference pixel in the decoded first sub-frame for a first pixel in the second sub-frame.

In operation S1840, the image decoding device 1900 may decode the second sub-frame by using the at least one intra flow and the decoded first sub-frame.

According to an embodiment of the present disclosure, the image decoding device 1900 may obtain an intra gate value for the at least one intra flow, the second sub-frame may be decoded by using the at least one intra flow, the intra gate value, and the decoded first sub-frame, and the intra gate value may indicate a weight for the at least one intra flow.

According to an embodiment of the present disclosure, when the at least one intra flow is a plurality of intra flows, the image decoding device 1900 may obtain an intra gate value corresponding to one of the plurality of intra flows, and the second sub-frame may be decoded by using the one of the plurality of intra flows, the intra gate value corresponding to the one of the plurality of intra flows, and the decoded first sub-frame.

According to an embodiment of the present disclosure, the image decoding device 1900 may obtain a second sub-residual frame for the second sub-frame, may obtain a second sub-prediction frame by using the at least one intra flow and the decoded first sub-frame, and may decode the second sub-frame by using the second sub-residual frame and the second sub-prediction frame.

In operation S1850, the image decoding device 1900 may reconstruct the current frame by using the decoded first sub-frame and the decoded second sub-frame.

According to an embodiment of the present disclosure, when the plurality of sub-frames include a third sub-frame, in order to decode the third sub-frame, the image decoding device 1900 may obtain at least one second intra flow for the decoded first sub-frame and at least one third intra flow for the decoded second sub-frame, may decode the third sub-frame by using the at least one second intra flow, the decoded first sub-frame, the at least one third intra flow, and the decoded second sub-frame, and may reconstruct the current frame by using the decoded first sub-frame, the decoded second sub-frame, and the decoded third sub-frame.

According to an embodiment of the present disclosure, when the plurality of sub-frames include a fourth sub-frame, in order to decode the fourth sub-frame, the image decoding device 1900 may obtain at least one fourth intra flow for the decoded first sub-frame, at least one fifth intra flow for the decoded second sub-frame, and at least one sixth intra flow for the decoded third sub-frame, may decode the fourth sub-frame by using the at least one fourth intra flow, the decoded first sub-frame, the at least one fifth intra flow, the decoded second sub-frame, the at least one sixth intra flow, and the decoded third sub-frame, and may reconstruct the current frame by using the decoded first sub-frame, the decoded second sub-frame, the decoded third sub-frame, and the decoded fourth sub-frame.

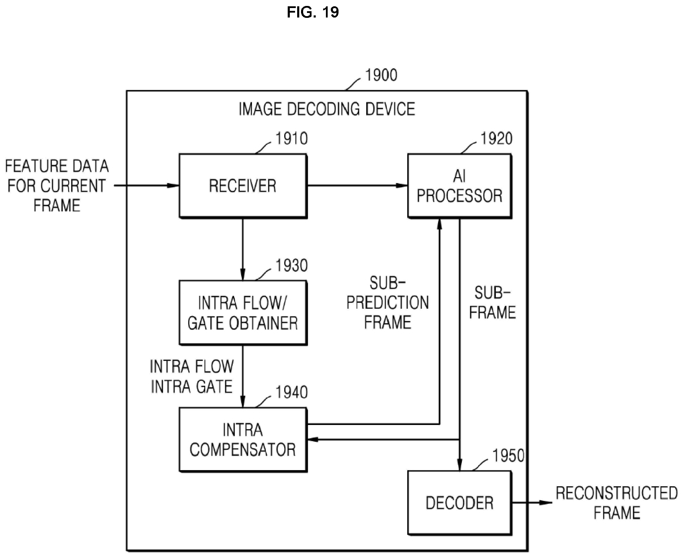

FIG. 19 is a diagram illustrating a configuration of an image decoding device according to an embodiment of the present disclosure.

Referring to FIG. 19, the image decoding device 1900 may include a receiver 1910, an artificial intelligence (AI) processor 1920, an intra flow/gate obtainer 1930, an intra compensator 1940, and a decoder 1950.

The receiver 1910, the AI processor 1920, the intra flow/gate obtainer 1930, the intra compensator 1940, and the decoder 1950 may be implemented as a processor. The processor may include at least one processing circuit and/or a plurality of processors. For example, the term "processor" used herein including the claims may include various processing circuits including at least one processor. In the at least one processor, one or more processors may be configured to perform various functions described herein, individually and/or collectively, in a distributed fashion. As used herein, the "processor", "at least one processor", and "one or more processors" may be configured to perform various functions. However, these terms cover, without limitation, a situation where one processor performs some of functions and other processors perform others of the functions, and a situation where a single processor may perform all functions. Also, the at least one processor may include a combination of processors for performing various functions of disclosed functions in a distributed manner. The at least one processor may execute program instructions to achieve or perform various functions. The receiver 1910, the AI processor 1920, the intra flow/gate obtainer 1930, the intra compensator 1940, and the decoder 1950 may operate according to instructions stored in a memory (not shown).

Although the receiver 1910, the AI processor 1920, the intra flow/gate obtainer 1930, the intra compensator 1940, and the decoder 1950 are individually illustrated in FIG. 19, the receiver 1910, the AI processor 1920, the intra flow/gate obtainer 1930, the intra compensator 1940, and the decoder 1950 may be implemented through one processor. In this case, the receiver 1910, the AI processor 1920, the intra flow/gate obtainer 1930, the intra compensator 1940, and the decoder 1950 may be implemented as a dedicated processor, or may be implemented through a combination of software and a general-purpose processor such as an application processor (AP), a central processing unit (CPU), or a graphics processing unit (GPU). Also, when the dedicated processor is used, the dedicated processor may include a memory for implementing an embodiment of the present disclosure or a memory processor for using an external memory.

The receiver 1910, the AI processor 1920, the intra flow/gate obtainer 1930, the intra compensator 1940, and the decoder 1950 may include a plurality of processors. In this case, the receiver 1910, the AI processor 1920, the intra flow/gate obtainer 1930, the intra compensator 1940, and the decoder 1950 may be implemented as a combination of dedicated processors, or may be implemented through a combination of software and a plurality of general-purpose processors such as an AP, a CPU, or a GPU.

The receiver 1910 may obtain feature data for a current frame from a bitstream.

The feature data for the current frame may be transmitted to the AI processor 1920 and the intra flow/gate obtainer 1930.

The AI processor 1920 may decode a first sub-frame among a plurality of sub-frames according to a pre-determined decoding order.

The intra flow/gate obtainer 1930 may output an intra flow and an intra gate for the first sub-frame of a second sub-frame.

The intra compensator 1940 may receive the intra flow and the intra gate for the first sub-frame of the second sub-frame from the intra flow/gate obtainer 1930, and may receive the first sub-frame from the AI processor 1920.

The intra compensator 1940 may obtain a second sub-prediction frame based on the first sub-frame and the intra gate and the intra flow for the first sub-frame of the second sub-frame.

The intra compensator 1940 may transmit the second sub-prediction frame to the AI processor 1920.

The AI processor 1920 may decode the second sub-frame based on the feature data for the current frame and the second sub-prediction frame.

According to an embodiment of the present disclosure, the AI processor 1920 may include the intra flow/gate obtainer 1930 and the intra compensator 1940. Accordingly, inside the AI processor 1920, the first sub-frame among the plurality of sub-frames may be decoded according to the pre-determined decoding order, the intra flow and the intra gate for the first sub-frame of the second sub-frame may be output, the second sub-prediction frame may be obtained based on the first sub-frame and the intra flow and the intra gate for the first sub-frame of the second sub-frame, and the second sub-frame may be decoded based on the feature data for the current frame and the second sub-prediction frame.

The decoder 1950 may obtain a reconstructed frame of the current frame based on the first sub-frame and the second sub-frame.

According to an embodiment of the present disclosure, when the plurality of sub-frames include a third sub-frame, in order to decode the third sub-frame, the intra flow/gate obtainer 1930 may obtain at least one second intra flow for the first sub-frame and at least one third intra flow for the second sub-frame, the intra compensator 1940 may obtain a third sub-prediction frame based on the at least one second intra flow, the first sub-frame, the at least one third intra flow, and the second sub-frame and may transmit the third sub-prediction frame to the AI processor 1920, the AI processor 1920 may decode the third sub-frame based on the feature data for the current frame and the third sub-prediction frame, and the decoder 1950 may obtain the reconstructed frame of the current frame based on the first sub-frame, the second sub-frame, and the third sub-frame.

According to an embodiment of the present disclosure, when the plurality of sub-frames include a fourth sub-frame, in order to decode the fourth sub-frame, the intra flow/gate obtainer 1930 may obtain at least one fourth intra flow for the first sub-frame, at least one fifth intra flow for the second sub-frame, and at least one sixth intra flow for the third sub-frame, the intra compensator 1940 may obtain a fourth sub-prediction frame based on the at least one fourth intra flow, the first sub-frame, the at least one fifth intra flow, the second sub-frame, the at least one sixth intra flow, and the third sub-frame and may transmit the fourth sub-prediction frame to the AI processor 1920, the AI processor 1920 may decode the fourth sub-frame based on the feature data for the current frame and the fourth sub-prediction frame, and the decoder 1950 may obtain the reconstructed frame of the current frame based on the first sub-frame, the second sub-frame, the third sub-frame, and the fourth sub-frame.

The AI processor 1920 and the intra flow/gate obtainer 1930 may be implemented as a neural network including one or more layers (e.g., convolutional layers).

The AI processor 1920 and the intra flow/gate obtainer 1930 may be stored in a memory. The AI processor 1920 and the intra flow/gate obtainer 1930 may be implemented as at least one dedicated processor for AI.

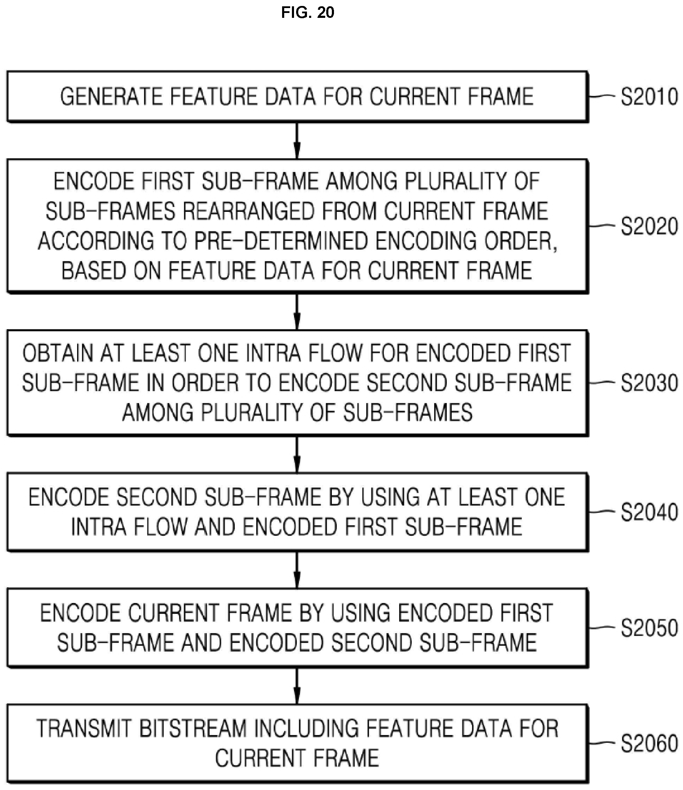

FIG. 20 is a flowchart illustrating an image encoding method according to an embodiment of the present disclosure.

Referring to FIG. 20, in operation S2010, the image encoding device 2100 may generate feature data for a current frame.

According to an embodiment of the present disclosure, the current frame may be a pixel map including pixels.

According to an embodiment of the present disclosure, the current frame may be a feature map.

In operation S2020, the image encoding device 2100 may encode a first sub-frame among a plurality of sub-frames rearranged from the current frame according to a pre-determined encoding order, based on the feature data for the current frame.

According to an embodiment of the present disclosure, the plurality of sub-frames may be obtained by dividing the current frame into a plurality of pixel groups and rearranging pixels at the same position in the plurality of pixel groups to be included in the same sub-frame.

In operation S2030, the image encoding device 2100 may obtain at least one intra flow for the encoded first sub-frame in order to encode a second sub-frame among the plurality of sub-frames.

According to an embodiment of the present disclosure, the at least one intra flow for the encoded first sub-frame may indicate a reference pixel in the encoded first sub-frame for a first pixel in the second sub-frame.

In operation S2040, the image encoding device 2100 may encode the second sub-frame by using the at least one intra flow and the decoded first sub-frame.

According to an embodiment of the present disclosure, the image encoding device 2100 may obtain an intra gate value for the at least one intra flow, the second sub-frame may be encoded by using the at least one intra flow, the intra gate value, and the encoded first sub-frame, and the intra gate value may indicate a weight for the at least one intra flow.

According to an embodiment of the present disclosure, when the at least one intra flow is a plurality of intra flows, the image encoding device 2100 may obtain an intra gate value corresponding to one of the plurality of intra flows, and the second sub-frame may be encoded by using the one of the plurality of intra flows, the intra gate value corresponding to the one of the plurality of intra flows, and the encoded first sub-frame.

According to an embodiment of the present disclosure, the image encoding device 2100 may obtain a second sub-residual frame for the second sub-frame, may obtain a second sub-prediction frame by using the at least one intra flow and the encoded first sub-frame, and may encode the second sub-frame by using the second sub-residual frame and the second sub-prediction frame.

In operation S2050, the image encoding device 2100 may encode the current frame by using the encoded first sub-frame and the encoded second sub-frame.

According to an embodiment of the present disclosure, when the plurality of sub-frames include a third sub-frame, in order to encode the third sub-frame, the image encoding device 2100 may obtain at least one second intra flow for the encoded first sub-frame and at least one third intra flow for the encoded second sub-frame, may encode the third sub-frame by using the at least one second intra flow, the encoded first sub-frame, the at least one third intra flow, and the encoded second sub-frame, and may encode the current frame by using the encoded first sub-frame, the encoded second sub-frame, and the encoded third sub-frame.

According to an embodiment of the present disclosure, when the plurality of sub-frames include a fourth sub-frame, in order to encode the fourth sub-frame, the image encoding device 2100 may obtain at least one fourth intra flow for the encoded first sub-frame, at least one fifth intra flow for the encoded second sub-frame, and at least one sixth intra flow for the encoded third sub-frame, may encode the fourth sub-frame by using the at least one fourth intra flow, the encoded first sub-frame, the at least one fifth intra flow, the encoded second sub-frame, the at least one sixth intra flow, and the encoded third sub-frame, and may encode the current frame by using the encoded first sub-frame, the encoded second sub-frame, the encoded third sub-frame, and the encoded fourth sub-frame.

In operation S2060, the image encoding device 2100 may transmit a bitstream including the feature data for the current frame.

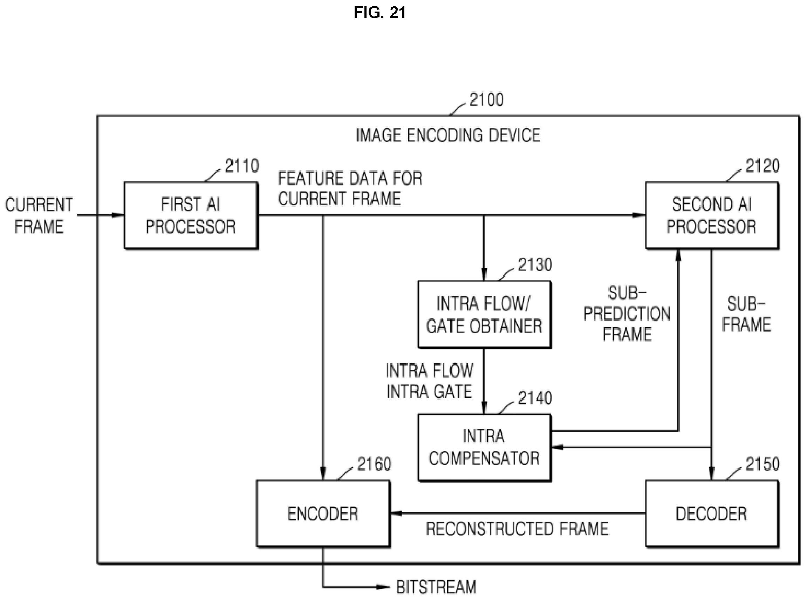

FIG. 21 is a diagram illustrating a configuration of an image encoding device according to an embodiment of the present disclosure.

Referring to FIG. 21, the image encoding device 2100 may include a first AI processor 2110, a second AI processor 2120, an intra flow/gate obtainer 2130, an intra compensator 2140, a decoder 2150, and an encoder 2160.

The first AI processor 2110, the second AI processor 2120, the intra flow/gate obtainer 2130, the intra compensator 2140, the decoder 2150, and the encoder 2160 may be implemented as a processor. The processor may include at least one processing circuit and/or a plurality of processors. For example, the term "processor" used herein including the claims may include various processing circuits including at least one processor. In the at least one processor, one or more processors may be configured to perform various functions described herein, individually and/or collectively, in a distributed fashion. As used herein, the "processor", "at least one processor", and "one or more processors" may be configured to perform various functions. However, these terms cover, without limitation, a situation where one processor performs some of functions and other processors perform others of the functions, and a situation where a single processor may perform all functions. Also, the at least one processor may include a combination of processors for performing various functions of disclosed functions in a distributed manner. The at least one processor may execute program instructions to achieve or perform various functions. The receiver 1910, the AI processor 1920, the intra flow/gate obtainer 1930, the intra compensator 1940, and the decoder 1950 may operate according to instructions stored in a memory (not shown).

Although the first AI processor 2110, the second AI processor 2120, the intra flow/gate obtainer 2130, the intra compensator 2140, the decoder 2150, and the encoder 2160 are individually illustrated in FIG. 21, the first AI processor 2110, the second AI processor 2120, the intra flow/gate obtainer 2130, the intra compensator 2140, the decoder 2150, and the encoder 2160 may be implemented through one processor. In this case, the first AI processor 2110, the second AI processor 2120, the intra flow/gate obtainer 2130, the intra compensator 2140, the decoder 2150, and the encoder 2160 may be implemented as a dedicated processor or may be implemented through a combination of software and a general-purpose processor such as an application processor (AP), a central processing unit (CPU), or a graphics processing unit (GPU). Also, when the dedicated processor is used, the dedicated processor may include a memory for implementing an embodiment of the present disclosure or a memory processor for using an external memory.

The first AI processor 2110, the second AI processor 2120, the intra flow/gate obtainer 2130, the intra compensator 2140, the decoder 2150, and the encoder 2160 may include a plurality of processors. In this case, the first AI processor 2110, the second AI processor 2120, the intra flow/gate obtainer 2130, the intra compensator 2140, the decoder 2150, and the encoder 2160 may be implemented as a combination of dedicated processors, or may be implemented through a combination of software and a plurality of general-purpose processors such as an AP, a CPU, or a GPU.

The first AI processor 2110 may receive a current frame as an input and may output feature data for the current frame.

The feature data for the current frame may be transmitted to the second AI processor 2120 and the intra flow/gate obtainer 2130.

The second AI processor 2120 may encode a first sub-frame among a plurality of sub-frames according to a pre-determined decoding order.

The intra flow/gate obtainer 2130 may output an intra flow and an intra gate for the first sub-frame of a second sub-frame.

The intra compensator 2140 may receive the intra flow and the intra gate for the first sub-frame of the second sub-frame from the intra flow/gate obtainer 2130, and may receive the first sub-frame from the AI processor 2120.

The intra compensator 2140 may obtain a second sub-prediction frame based on the first sub-frame and the intra gate and the intra flow for the first sub-frame of the second sub-frame.

The intra compensator 2140 may transmit the second sub-prediction frame to the second AI processor 2120.

The second AI processor 2120 may encode the second sub-frame based on the feature data for the current frame and the second sub-prediction frame.

According to an embodiment of the present disclosure, the second AI processor 2120 may include the intra flow/gate obtainer 2130 and the intra compensator 2140. Accordingly, inside the second AI processor 2120, the first sub-frame among the plurality of sub-frames may be decoded according to the pre-determined decoding order, the intra flow and the intra gate for the first sub-frame of the second sub-frame may be output, the second sub-prediction frame may be obtained based on the first sub-frame and the intra flow and the intra gate for the first sub-frame of the second sub-frame, and the second sub-frame may be decoded based on the feature data for the current frame and the second sub-prediction frame.

The decoder 2150 may obtain a reconstructed frame of the current frame based on the first sub-frame and the second sub-frame.

According to an embodiment of the present disclosure, when the plurality of sub-frames include a third sub-frame, in order to decode the third sub-frame, the intra flow/gate obtainer 2130 may obtain at least one second intra flow for the first sub-frame and at least one third intra flow for the second sub-frame, the intra compensator 2140 may obtain a third sub-prediction frame based on the at least one second intra flow, the first sub-frame, the at least one third intra flow, and the second sub-frame and may transmit the third sub-prediction frame to the second AI processor 2120, the second AI processor 2120 may decode the third sub-frame based on the feature data for the current frame and the third sub-prediction frame, and the decoder 2150 may obtain the reconstructed frame of the current frame based on the first sub-frame, the second sub-frame, and the third sub-frame.

According to an embodiment of the present disclosure, when the plurality of sub-frames include a fourth sub-frame, in order to decode the fourth sub-frame, the intra flow/gate obtainer 2130 may obtain at least one fourth intra flow for the first sub-frame, at least one fifth intra flow for the second sub-frame, and at least one sixth intra flow for the third sub-frame, the intra compensator 2140 may obtain a fourth sub-prediction frame based on the at least one fourth intra flow, the first sub-frame, the at least one fifth intra flow, the second sub-frame, the at least one sixth intra flow, and the third sub-frame and may transmit the fourth sub-prediction frame to the second AI processor 2120, the second AI processor 2120 may decode the fourth sub-frame based on the feature data for the current frame and the fourth sub-prediction frame, and the decoder 2150 may obtain the reconstructed frame of the current frame based on the first sub-frame, the second sub-frame, the third sub-frame, and the fourth sub-frame.

The encoder 2160 may generate a bitstream including data for the current frame based on the reconstructed frame.

The first AI processor 2110, the second AI processor 2120, and the intra flow/gate obtainer 2130 may be implemented as a neural network including one or more layers (e.g., convolutional layers).

The first AI processor 2110, the second AI processor 2120, and the intra flow/gate obtainer 2130 may be stored in a memory. The first AI processor 2110, the second AI processor 2120, and the intra flow/gate obtainer 2130 may be implemented as at least one dedicated processor for AI.

An image decoding method according to an embodiment of the present disclosure may include: obtaining feature data for a current frame from a bitstream; decoding a first sub-frame among a plurality of sub-frames rearranged from the current frame according to a pre-determined decoding order, based on the feature data for the current frame; obtaining at least one intra flow for the decoded first sub-frame in order to decode a second sub-frame among the plurality of sub-frames; decoding the second sub-frame by using the at least one intra flow and the decoded first sub-frame; and reconstructing the current frame by using the decoded first sub-frame and the decoded second sub-frame.

The image decoding method according to an embodiment of the present disclosure may effectively reconstruct an image by dividing the current frame into sub-frames, progressively decoding each sub-frame, using the decoded sub-frame as a reference sub-frame, and using an intra flow between the sub-frames.

According to an embodiment of the present disclosure, the plurality of sub-frames may be obtained by dividing the current frame into a plurality of pixel groups and rearranging pixels at the same position in the plurality of pixel groups to be included in the same sub-frame.

The image decoding method according to an embodiment of the present disclosure may effectively reconstruct an image by dividing the current frame into a plurality of pixel groups, using a decoded sub-frame among sub-frames formed by collecting and rearranging pixels at the same position in the plurality of pixel groups as a reference sub-frame, and using an intra flow between the sub-frames.

According to an embodiment of the present disclosure, the at least one intra flow for the decoded first sub-frame may indicate a reference pixel in the decoded first sub-frame for a first pixel in the second sub-frame.

The image decoding method according to an embodiment of the present disclosure may effectively reconstruct an image by using an intra flow between a plurality of sub-frames rearranged from the current frame.

The image decoding method according to an embodiment of the present disclosure may further include obtaining an intra gate value for the at least one intra flow, wherein the second sub-frame is decoded by using the at least one intra flow, the intra gate value, and the decoded first sub-frame, and the intra gate value indicates a weight for the at least one intra flow.

The image decoding method according to an embodiment of the present disclosure may effectively reconstruct an image by using an intra flow between a plurality of sub-frames rearranged from the current frame and an intra gate value indicating a degree of reliability for the intra flow.

According to an embodiment of the present disclosure, when the at least one intra flow is a plurality of intra flows, an intra gate value corresponding to one of the plurality of intra flows may be obtained, and the second sub-frame may be decoded by using the one of the plurality of intra flows, the intra gate value corresponding to the one of the plurality of intra flows, and the decoded first sub-frame.

The image decoding method according to an embodiment of the present disclosure may effectively reconstruct an image by using a plurality of intra flows between a plurality of sub-frames rearranged from the current frame and a plurality of intra gate values indicating degrees of reliability for the plurality of intra flows.

According to an embodiment of the present disclosure, the decoding of the second sub-frame by using the at least one intra flow and the decoded first sub-frame may further include: obtaining a second sub-residual frame for the second sub-frame; obtaining a second sub-prediction frame by using the at least one intra flow and the decoded first sub-frame; and decoding the second sub-frame by using the second sub-residual frame and the second sub-prediction frame.

The image decoding method according to an embodiment of the present disclosure may effectively reconstruct an image by obtaining a sub-prediction frame by using an intra flow between sub-frames and adding the sub-prediction frame and a sub-residual frame.

The image decoding method according to an embodiment of the present disclosure may further include, when the plurality of sub-frames include a third sub-frame: obtaining at least one second intra flow for the decoded first sub-frame and at least one third intra flow for the decoded second sub-frame in order to decode the third sub-frame; decoding the third sub-frame by using the at least one second intra flow, the decoded first sub-frame, the at least one third intra flow, and the decoded second sub-frame; and reconstructing the current frame by using the decoded first sub-frame, the decoded second sub-frame, and the decoded third sub-frame.

The image decoding method according to an embodiment of the present disclosure may further include, when the plurality of sub-frames include a fourth sub-frame: obtaining at least one fourth intra flow for the decoded first sub-frame, at least one fifth intra flow for the decoded second sub-frame, and at least one sixth intra flow for the decoded third sub-frame in order to decode the fourth sub-frame; decoding the fourth sub-frame by using the at least one fourth intra flow, the decoded first sub-frame, the at least one fifth intra flow, the decoded second sub-frame, the at least one sixth intra flow, and the decoded third sub-frame; and reconstructing the current frame by using the decoded first sub-frame, the decoded second sub-frame, the decoded third sub-frame, and the decoded fourth sub-frame.

The image decoding method according to an embodiment of the present disclosure may effectively reconstruct an image by dividing the current frame into sub-frames, progressively decoding each sub-frame, using the decoded sub-frame as a reference sub-frame, and using an intra flow between the sub-frames.

An image decoding device according to an embodiment of the present disclosure may include: a memory storing one or more instructions; and at least one processor operating according to the one or more instructions, wherein the at least one processor obtains feature data for a current frame from a bitstream, decodes a first sub-frame among a plurality of sub-frames rearranged from the current frame according to a pre-determined decoding order, based on the feature data for the current frame, obtains at least one intra flow for the decoded first sub-frame in order to decode a second sub-frame among the plurality of sub-frames, decodes the second sub-frame by using the at least one intra flow and the decoded first sub-frame, and reconstructs the current frame by using the decoded first sub-frame and the decoded second sub-frame.

The image decoding device according to an embodiment of the present disclosure may effectively reconstruct an image by dividing the current frame into sub-frames, progressively decoding each sub-frame, using the decoded sub-frame as a reference sub-frame, and using an intra flow between the sub-frames.

According to an embodiment of the present disclosure, the plurality of sub-frames may be obtained by dividing the current frame into a plurality of pixel groups and rearranging pixels at the same position in the plurality of pixel groups to be included in the same sub-frame.

The image decoding device according to an embodiment of the present disclosure may effectively reconstruct an image by dividing the current frame into a plurality of pixel groups, using a decoded sub-frame among sub-frames formed by collecting and rearranging pixels at the same position in the plurality of pixel groups as a reference sub-frame, and using an intra flow between the sub-frames.

According to an embodiment of the present disclosure, the at least one intra flow for the decoded first sub-frame may indicate a reference pixel in the decoded first sub-frame for a first pixel in the second sub-frame.

The image decoding device according to an embodiment of the present disclosure may effectively reconstruct an image by using an intra flow between a plurality of sub-frames rearranged from the current frame.

According to an embodiment of the present disclosure, the at least one processor may obtain an intra gate value for the at least one intra flow, the second sub-frame may be decoded by using the at least one intra flow, the intra gate value, and the decoded first sub-frame, and the intra gate value may indicate a weight for the at least one intra flow.

The image decoding device according to an embodiment of the present disclosure may effectively reconstruct an image by using an intra flow between a plurality of sub-frames rearranged from the current frame and an intra gate value indicating a degree of reliability for the intra flow.

According to an embodiment of the present disclosure, when the at least one intra flow is a plurality of intra flows, an intra gate value corresponding to one of the plurality of intra flows may be obtained, and the second sub-frame may be decoded by using the one of the plurality of intra flows, the intra gate value corresponding to the one of the plurality of intra flows, and the decoded first sub-frame.

The image decoding device according to an embodiment of the present disclosure may effectively reconstruct an image by using a plurality of intra flows between a plurality of sub-frames rearranged from the current frame and a plurality of intra gate values indicating degrees of reliability for the plurality of intra flows.

According to an embodiment of the present disclosure, the at least one processor may obtain a second sub-residual frame for the second sub-frame, may obtain a second sub-prediction frame by using the at least one intra flow and the decoded first sub-frame, and may decode the second sub-frame by using the second sub-residual frame and the second sub-prediction frame.

The image decoding device according to an embodiment of the present disclosure may effectively reconstruct an image by obtaining a sub-prediction frame by using an intra flow between sub-frames and adding the sub-prediction frame and a sub-residual frame.

According to an embodiment of the present disclosure, when the plurality of sub-frames include a third sub-frame, in order to decode the third sub-frame, the at least one processor may obtain at least one second intra flow for the decoded first sub-frame and at least one third intra flow for the decoded second sub-frame, may decode the third sub-frame by using the at least one second intra flow, the decoded first sub-frame, the at least one third intra flow, and the decoded second sub-frame, and may reconstruct the current frame by using the decoded first sub-frame, the decoded second sub-frame, and the decoded third sub-frame.

According to an embodiment of the present disclosure, when the plurality of sub-frames include a fourth sub-frame, in order to decode the fourth sub-frame, the at least one processor may obtain at least one fourth intra flow for the decoded first sub-frame, at least one fifth intra flow for the decoded second sub-frame, and at least one sixth intra flow for the decoded third sub-frame, may decode the fourth sub-frame by using the at least one fourth intra flow, the decoded first sub-frame, the at least one fifth intra flow, the decoded second sub-frame, the at least one sixth intra flow, and the decoded third sub-frame, and may reconstruct the current frame by using the decoded first sub-frame, the decoded second sub-frame, the decoded third sub-frame, and the decoded fourth sub-frame.

The image decoding device according to an embodiment of the present disclosure may effectively reconstruct an image by dividing the current frame into sub-frames, progressively decoding each sub-frame, using the decoded sub-frame as a reference sub-frame, and using an intra flow between the sub-frames.

An image encoding method according to an embodiment of the present disclosure may include: generating feature data for a current frame; encoding a first sub-frame among a plurality of sub-frames rearranged from the current frame according to a pre-determined encoding order, based on the feature data for the current frame; obtaining at least one intra flow for the encoded first sub-frame in order to encode a second sub-frame among the plurality of sub-frames; encoding the second sub-frame by using the at least one intra flow and the encoded first sub-frame; encoding the current frame by using the encoded first sub-frame and the encoded second sub-frame; and transmitting a bitstream including the feature data for the current frame.

The image encoding method according to an embodiment of the present disclosure may effectively encode an image by dividing the current frame into sub-frames, progressively encoding each sub-frame, using the encoded sub-frame as a reference sub-frame, and using an intra flow between the sub-frames.

According to an embodiment of the present disclosure, the plurality of sub-frames may be obtained by dividing the current frame into a plurality of pixel groups and rearranging pixels at the same position in the plurality of pixel groups to be included in the same sub-frame.

The image encoding method according to an embodiment of the present disclosure may effectively encode an image by dividing the current frame into a plurality of pixel groups, using an encoded sub-frame among sub-frames formed by collecting and rearranging pixels at the same position in the plurality of pixel groups as a reference sub-frame, and using an intra flow between the sub-frames.

According to an embodiment of the present disclosure, the at least one intra flow for the encoded first sub-frame may indicate a reference pixel in the encoded first sub-frame for a first pixel in the second sub-frame.

The image encoding method according to an embodiment of the present disclosure may effectively encode an image by using an intra flow between a plurality of sub-frames rearranged from the current frame.

The image encoding method according to an embodiment of the present disclosure may further include obtaining an intra gate value for the at least one intra flow, wherein the second sub-frame is encoded by using the at least one intra flow, the intra gate value, and the encoded first sub-frame, and the intra gate value indicates a weight for the at least one intra flow.

The image encoding method according to an embodiment of the present disclosure may effectively encode an image by using an intra flow between a plurality of sub-frames rearranged from the current frame and an intra gate value indicating a degree of reliability for the intra flow.

According to an embodiment of the present disclosure, when the at least one intra flow is a plurality of intra flows, an intra gate value corresponding to one of the plurality of intra flows may be obtained, and the second sub-frame may be encoded by using the one of the plurality of intra flows, the intra gate value corresponding to the one of the plurality of intra flows, and the encoded first sub-frame.

The image encoding method according to an embodiment of the present disclosure may effectively encode an image by using a plurality of intra flows between a plurality of sub-frames rearranged from the current frame and a plurality of intra gate values indicating degrees of reliability for the plurality of intra flows.

According to an embodiment of the present disclosure, the encoding of the second sub-frame by using the at least one intra flow and the encoded first sub-frame may further include: obtaining a second sub-residual frame for the second sub-frame; obtaining a second sub-prediction frame by using the at least one intra flow and the encoded first sub-frame; and encoding the second sub-frame by using the second sub-residual frame and the second sub-prediction frame.

The image encoding method according to an embodiment of the present disclosure may effectively encode an image by obtaining a sub-prediction frame by using an intra flow between sub-frames and adding the sub-prediction frame and a sub-residual frame.

The image encoding method according to an embodiment of the present disclosure may further include, when the plurality of sub-frames include a third sub-frame: obtaining at least one second intra flow for the encoded first sub-frame and at least one third intra flow for the encoded second sub-frame in order to encode the third sub-frame; encoding the third sub-frame by using the at least one second intra flow, the encoded first sub-frame, the at least one third intra flow, and the encoded second sub-frame; and encoding the current frame by using the encoded first sub-frame, the encoded second sub-frame, and the encoded third sub-frame.

The image encoding method according to an embodiment of the present disclosure may further include, when the plurality of sub-frames include a fourth sub-frame: obtaining at least one fourth intra flow for the encoded first sub-frame, at least one fifth intra flow for the encoded second sub-frame, and at least one sixth intra flow for the encoded third sub-frame in order to encode the fourth sub-frame; encoding the fourth sub-frame by using the at least one fourth intra flow, the encoded first sub-frame, the at least one fifth intra flow, the encoded second sub-frame, the at least one sixth intra flow, and the encoded third sub-frame; and encoding the current frame by using the encoded first sub-frame, the encoded second sub-frame, the encoded third sub-frame, and the encoded fourth sub-frame.

The image encoding method according to an embodiment of the present disclosure may effectively encode an image by dividing the current frame into sub-frames, progressively encoding each sub-frame, using the encoded sub-frame as a reference sub-frame, and using an intra flow between the sub-frames.

An image encoding device according to an embodiment of the present disclosure may include: a memory storing one or more instructions; and at least one processor operating according to the one or more instructions, wherein the at least one processor generates feature data for a current frame, encodes a first sub-frame among a plurality of sub-frames rearranged from the current frame according to a pre-determined encoding order, based on the feature data for the current frame, obtains at least one intra flow for the encoded first sub-frame in order to encode a second sub-frame among the plurality of sub-frames, encodes the second sub-frame by using the at least one intra flow and the encoded first sub-frame, encodes the current frame by using the encoded first sub-frame and the encoded second sub-frame, and transmits a bitstream including the feature data for the current frame.

The image encoding device according to an embodiment of the present disclosure may effectively encode an image by dividing the current frame into sub-frames, progressively encoding each sub-frame, using the encoded sub-frame as a reference sub-frame, and using an intra flow between the sub-frames.

According to an embodiment of the present disclosure, the plurality of sub-frames may be obtained by dividing the current frame into a plurality of pixel groups and rearranging pixels at the same position in the plurality of pixel groups to be included in the same sub-frame.

The image encoding device according to an embodiment of the present disclosure may effectively encode an image by dividing the current frame into a plurality of pixel groups, using an encoded sub-frame among sub-frames formed by collecting and rearranging pixels at the same position in the plurality of pixel groups as a reference sub-frame,, and using an intra flow between the sub-frames.

According to an embodiment of the present disclosure, the at least one intra flow for the encoded first sub-frame may indicate a reference pixel in the encoded first sub-frame for a first pixel in the second sub-frame.

The image encoding device according to an embodiment of the present disclosure may effectively encode an image by using an intra flow between a plurality of sub-frames rearranged from the current frame.

According to an embodiment of the present disclosure, the at least one processor may obtain an intra gate value for the at least one intra flow, the second sub-frame may be encoded by using the at least one intra flow, the intra gate value, and the encoded first sub-frame, and the intra gate value may indicate a weight for the at least one intra flow.

The image encoding device according to an embodiment of the present disclosure may effectively encode an image by using an intra flow between a plurality of sub-frames rearranged from the current frame and an intra gate value indicating a degree of reliability for the intra flow.

According to an embodiment of the present disclosure, when the at least one intra flow is a plurality of intra flows, an intra gate value corresponding to one of the plurality of intra flows may be obtained, and the second sub-frame may be encoded by using the one of the plurality of intra flows, the intra gate value corresponding to the one of the plurality of intra flows, and the encoded first sub-frame.

The image encoding device according to an embodiment of the present disclosure may effectively encode an image by using a plurality of intra flows between a plurality of sub-frames rearranged from the current frame and a plurality of intra gate values indicating degrees of reliability for the plurality of intra flows.

According to an embodiment of the present disclosure, the at least one processor may obtain a second sub-residual frame for the second sub-frame, may obtain a second sub-prediction frame by using the at least one intra flow and the encoded first sub-frame, and may encode the second sub-frame by using the second sub-residual frame and the second sub-prediction frame.

The image encoding device according to an embodiment of the present disclosure may effectively encode an image by obtaining a sub-prediction frame by using an intra flow between sub-frames and adding the sub-prediction frame and a sub-residual frame.

According to an embodiment of the present disclosure, when the plurality of sub-frames include a third sub-frame, in order to encode the third sub-frame, the at least one processor may obtain at least one second intra flow for the encoded first sub-frame and at least one third intra flow for the encoded second sub-frame, may encode the third sub-frame by using the at least one second intra flow, the encoded first sub-frame, the at least one third intra flow, and the encoded second sub-frame, and may encode the current frame by using the encoded first sub-frame, the encoded second sub-frame, and the encoded third sub-frame.

According to an embodiment of the present disclosure, when the plurality of sub-frames include a fourth sub-frame, in order to encode the fourth sub-frame, the at least one processor may obtain at least one fourth intra flow for the encoded first sub-frame, at least one fifth intra flow for the encoded second sub-frame, and at least one sixth intra flow for the encoded third sub-frame, may encode the fourth sub-frame by using the at least one fourth intra flow, the encoded first sub-frame, the at least one fifth intra flow, the encoded second sub-frame, the at least one sixth intra flow, and the encoded third sub-frame, and may encode the current frame by using the encoded first sub-frame, the encoded second sub-frame, the encoded third sub-frame, and the encoded fourth sub-frame.

The image encoding device according to an embodiment of the present disclosure may effectively encode an image by dividing the current frame into sub-frames, progressively encoding each sub-frame, using the encoded sub-frame as a reference sub-frame, and using an intra flow between the sub-frames.

A machine-readable storage medium may be provided in the form of a non-transitory storage medium. Here, 'non-transitory' means that the storage medium does not include a signal (e.g., electromagnetic waves) and is tangible, but does not distinguish whether data is stored semipermanently or temporarily in the storage medium. For example, the "non-transitory storage medium" may include a buffer in which data is temporarily stored.

According to an embodiment, a method according to various embodiments disclosed herein may be included and provided in a computer program product. The computer program product may be traded between a seller and a buyer as a product. The computer program product may be distributed in the form of a machine-readable storage medium (e.g., a compact disc read-only memory (CD-ROM)), or may be distributed (e.g., downloaded or uploaded) online through an application store or directly between two user devices (e.g., smartphones). In the case of online distribution, at least a part of the computer program product (e.g., a downloadable app) may be at least temporarily stored in a machine-readable storage medium such as a memory of a manufacturer's server, a server of an application store, or a relay server, or may be temporarily generated.

## Claims

1. An image decoding method comprising:
obtaining feature data for a current frame from a bitstream (S1810);
decoding a first sub-frame among a plurality of sub-frames rearranged from the current frame according to a pre-determined decoding order, based on the feature data for the current frame (S1820);
obtaining at least one intra flow for the decoded first sub-frame in order to decode a second sub-frame among the plurality of sub-frames (S1830);
decoding the second sub-frame by using the at least one intra flow and the decoded first sub-frame (S1840); and
reconstructing the current frame by using the decoded first sub-frame and the decoded second sub-frame (S1850).

2. The image decoding method of claim 1, wherein the plurality of sub-frames are obtained by dividing the current frame into a plurality of pixel groups and rearranging pixels at a same position in the plurality of pixel groups to be included in a same sub-frame.

3. The image decoding method of claim 1 or 2, wherein the at least one intra flow for the decoded first sub-frame indicates a reference pixel in the decoded first sub-frame for a first pixel in the second sub-frame.

4. The image decoding method of any one of claims 1 to 3, further comprising obtaining an intra gate value for the at least one intra flow,
wherein the second sub-frame is decoded by using the at least one intra flow, the intra gate value, and the decoded first sub-frame, and
the intra gate value indicates a weight for the at least one intra flow.

5. The image decoding method of any one of claims 1 to 4, wherein, when the at least one intra flow is a plurality of intra flows,
an intra gate value corresponding to one of the plurality of intra flows is obtained, and
the second sub-frame is decoded by using the one of the plurality of intra flows, the intra gate value corresponding to the one of the plurality of intra flows, and the decoded first sub-frame.

6. The image decoding method of any one of claims 1 to 5, wherein the decoding of the second sub-frame by using the at least one intra flow and the decoded first sub-frame further comprises:
obtaining a second sub-residual frame for the second sub-frame;
obtaining a second sub-prediction frame by using the at least one intra flow and the decoded first sub-frame; and
decoding the second sub-frame by using the second sub-residual frame and the second sub-prediction frame.

7. The image decoding method of any one of claims 1 to 6, further comprising, when the plurality of sub-frames comprise a third sub-frame:
obtaining at least one second intra flow for the decoded first sub-frame and at least one third intra flow for the decoded second sub-frame in order to decode the third sub-frame;
decoding the third sub-frame by using the at least one second intra flow, the decoded first sub-frame, the at least one third intra flow, and the decoded second sub-frame; and
reconstructing the current frame by using the decoded first sub-frame, the decoded second sub-frame, and the decoded third sub-frame.

8. The image decoding method of claim 7, further comprising, when the plurality of sub-frames comprise a fourth sub-frame:
obtaining at least one fourth intra flow for the decoded first sub-frame, at least one fifth intra flow for the decoded second sub-frame, and at least one sixth intra flow for the decoded third sub-frame in order to decode the fourth sub-frame;
decoding the fourth sub-frame by using the at least one fourth intra flow, the decoded first sub-frame, the at least one fifth intra flow, the decoded second sub-frame, the at least one sixth intra flow, and the decoded third sub-frame; and
reconstructing the current frame by using the decoded first sub-frame, the decoded second sub-frame, the decoded third sub-frame, and the decoded fourth sub-frame.

9. An image encoding method comprising:
generating feature data for a current frame (S2010);
encoding a first sub-frame among a plurality of sub-frames rearranged from the current frame according to a pre-determined encoding order, based on the feature data for the current frame (S2020);
obtaining at least one intra flow for the encoded first sub-frame in order to encode a second sub-frame among the plurality of sub-frames (S2030);
encoding the second sub-frame by using the at least one intra flow and the encoded first sub-frame (S2040);
encoding the current frame by using the encoded first sub-frame and the encoded second sub-frame (S2050); and
transmitting a bitstream comprising the feature data for the current frame (S2060).

10. The image encoding method of claim 9, wherein the plurality of sub-frames are obtained by dividing the current frame into a plurality of pixel groups and rearranging pixels at a same position in the plurality of pixel groups to be included in a same sub-frame.

11. The image encoding method of claim 9 or 10, wherein the at least one intra flow for the encoded first sub-frame indicates a reference pixel in the encoded first sub-frame for a first pixel in the second sub-frame.

12. The image encoding method of any one of claims 9 to 11, further comprising obtaining an intra gate value for the at least one intra flow,
wherein the second sub-frame is encoded by using the at least one intra flow, the intra gate value, and the encoded first sub-frame, and
the intra gate value indicates a weight for the at least one intra flow.

13. The image encoding method of any one of claims 9 to 12, wherein, when the at least one intra flow is a plurality of intra flows,
an intra gate value corresponding to one of the plurality of intra flows is obtained, and
the second sub-frame is encoded by using the one of the plurality of intra flows, the intra gate value corresponding to the one of the plurality of intra flows, and the encoded first sub-frame.

14. The image encoding method of any one of claims 9 to 13, further comprising, when the plurality of sub-frames comprise a third sub-frame:
obtaining at least one second intra flow for the encoded first sub-frame and at least one third intra flow for the encoded second sub-frame in order to encode the third sub-frame;
encoding the third sub-frame by using the at least one second intra flow, the encoded first sub-frame, the at least one third intra flow, and the encoded second sub-frame; and
encoding the current frame by using the encoded first sub-frame, the encoded second sub-frame, and an encoded third sub-frame.

15. The image encoding method of claim 14, further comprising, when the plurality of sub-frames comprise a fourth sub-frame:
obtaining at least one fourth intra flow for the encoded first sub-frame, at least one fifth intra flow for the encoded second sub-frame, and at least one sixth intra flow for the encoded third sub-frame in order to encode the fourth sub-frame;
encoding the fourth sub-frame by using the at least one fourth intra flow, the encoded first sub-frame, the at least one fifth intra flow, the encoded second sub-frame, the at least one sixth intra flow, and the encoded third sub-frame; and
encoding the current frame by using the encoded first sub-frame, the encoded second sub-frame, the encoded third sub-frame, and the encoded fourth sub-frame.
